# EUROPEAN PATENT APPLICATION

(11) **EP 4 852 396 A2**
(43) Date of publication of application: **09.12.2026**
(21) Application number: 26214067.6
(22) Date of filing: 24.12.2024
(51) Int. Cl.: H04L 47/62

(54) **LOW LATENCY, LOW LOSS, AND SCALABLE THROUGHPUT CONGESTION SIGNALING FROM LOWER PROTOCOL LAYER TO HIGHER PROTOCOL LAYER OF NETWORK STACK**

(30) Priority: 26.12.2023 US 202363614899 P; 12.04.2024 US 202463633500 P; 17.12.2024 US 202418985004
(62) Document number(s) of the earlier application(s) in accordance with Art. 76 EPC: 24847091.6 / 4 833 876
(71) Applicant: Cisco Technology, Inc., San Jose, CA 95134 (US)
(72) Inventor: GUPTA, Binita, San Jose (US); ZUNIGA, Juan Carlos, San Jose (US); HENRY, Jerome, San Jose (US)
(74) Representative: Roberts, Gwilym Vaughan

(57) **Abstract**

Devices, networks, systems, methods, and processes for congestion signaling in a communication network are provided herein. The congestion signaling may be performed from a lower protocol layer circuit of a network device of the communication network to a higher protocol layer circuit of the network device. The lower protocol layer circuit may maintain a Low Latency, Low Loss, and Scalable throughput (L4S) data queue. The L4S data queue may buffer one or more L4S data packets of at least one L4S data flow for transmission. The lower protocol layer circuit may further detect a congestion in the L4S data queue and transmit, to the higher protocol layer circuit, a congestion signal configured to indicate the detected congestion. The transmission of the congestion signal may enable the higher protocol layer circuit to mark one or more subsequent L4S data packets of the L4S data flow to indicate the congestion.

## Description

### CROSS-REFERENCE TO RELATED APPLICATIONS

This application claims priority to U.S. Patent Application No. 18/985,004, filed December 17, 2024, which claims the benefit of and priority to U.S. Provisional Application No. 63/633,500, filed April 12, 2024; and U.S. Provisional Application No. 63/614,899, filed December 26, 2023, the entirety of which is incorporated herein by reference.

### FIELD

The present disclosure relates to communication networks. More particularly, the present disclosure relates to congestion signaling from a lower protocol layer to a higher protocol layer of a network stack for Low Latency, Low Loss, and Scalable throughput (L4S) data flows.

### BACKGROUND

Communication networks enable communication between multiple interconnected devices. For real-time or near-real-time applications, such as streaming video and multiplayer gaming, minimizing latency helps in maintaining a seamless user experience. To address this, Low Latency, Low Loss, and Scalable throughput (L4S) mechanisms have been developed. L4S may focus on achieving low queuing latency and providing scalable throughput control. For example, L4S may minimize time spent by data packets in queues, thereby reducing overall latency experienced by the real-time or near-real-time applications. Further, L4S may enable communication networks to adapt to varying demand levels from devices, thereby ensuring efficient utilization of network resources.

Conventional systems implementing L4S typically employ a dual queue architecture, where L4S traffic is maintained in a separate, shallow queue. These conventional systems may also utilize a conditional priority scheduler to assign higher priority to the L4S traffic. Furthermore, the conventional systems may often operate on the assumption that a scalable congestion control mechanism exists at a source device to maintain consistently low congestion signaling intervals, even as flow rate scales. Additionally, the conventional systems may require packet headers at a higher protocol layer (e.g., Layer 3, Layer 4, or the like) of a network stack to facilitate Explicit Congestion Notification (ECN) signaling.

In many conventional systems, dual queues may be implemented at a lower protocol layer (e.g., Layer 2) of the network stack. When congestion occurs in lower layer queues, the lower protocol layer may lack permission to modify packet headers of the upper protocol layer due to protocol boundary restrictions, creating a protocol constraint. Moreover, modifying the packet headers for congested data packets may be a complex and challenging process. For example, the modification of the packet headers may involve decrypting and dequeuing encrypted packets, updating packet headers, and then re-encrypting and requeuing the data packets. This process is not only time-consuming but also a resource-intensive process, potentially causing significant delays in ECN signaling. These limitations may prevent systems implementing L4S from fully leveraging the benefits of L4S, reducing L4S effectiveness in minimizing queuing latency and providing scalable throughput.

### SUMMARY OF THE DISCLOSURE

Systems and methods for congestion signaling from a lower protocol layer to a higher protocol layer of a network stack for Low Latency, Low Loss, and Scalable throughput (L4S) data flows in accordance with embodiments of the disclosure are described herein. In one aspect of the present disclosure, a network device is provided. The network device comprises a higher protocol layer circuit and a lower protocol layer circuit coupled to the higher protocol layer circuit. The lower protocol layer circuit is configured to maintain a Low Latency, Low Loss, and Scalable throughput (L4S) data queue, where the L4S data queue may buffer one or more L4S data packets of at least one L4S data flow for transmission. Further, the lower protocol layer circuit is configured to detect a congestion in the L4S data queue and transmit, to the higher protocol layer circuit, a congestion signal configured to indicate the detected congestion.

In many embodiments, the lower protocol layer circuit is further configured to identify, from the one or more L4S data packets in the L4S data queue, a set of L4S data packets that is experiencing the congestion.

In a number of embodiments, the congestion signal comprises at least one of a congestion experienced flag, a direction indicating the congestion in downstream, a User Priority (UP) associated with the set of L4S data packets, a Traffic Identifier (TID) associated with the set of L4S data packets, or a Stream Classification Service (SCS) Identifier (SCSID) for an SCS stream associated with the set of L4S data packets.

In a variety of embodiments, the congestion signal further comprises at least one of a classic queue drop probability identifying a likelihood of packet drop in a non-L4S data queue or L4S congestion information identifying additional information related to the detected congestion.

In many additional embodiments, prior to transmitting the congestion signal, the lower protocol layer circuit is further configured to determine at least one of: a first congestion marking count that identifies a count of the set of L4S data packets experiencing the congestion, a second congestion marking count that identifies a count of subsequent L4S data packets of the at least one L4S data flow to mark for the congestion, an L4S congestion marking probability that identifies a probability of marking at least one subsequent L4S data packet of the at least one L4S data flow for the congestion, a first percentage of packets that identifies a percentage of L4S data packets in the L4S data queue for which the congestion is experienced, or a second percentage of packets that identifies a percentage of subsequent L4S data packets of the at least one L4S data flow to mark for the congestion. The congestion signal is further configured to indicate the determined at least one of: the first congestion marking count, the second congestion marking count, the L4S congestion marking probability, the first percentage of packets, or the second percentage of packets.

In still further embodiments, the higher protocol layer circuit is configured to receive the congestion signal from the lower protocol layer circuit and mark, based on the received congestion signal, the at least one subsequent L4S data packet of the at least one L4S data flow to indicate the detected congestion.

In still yet further embodiments, the marking of the at least one subsequent L4S data packet to indicate the detected congestion comprises setting a congestion indicator associated with the at least one subsequent L4S data packet to a preset value.

In further additional embodiments, the congestion indicator corresponds to an Explicit Congestion Notification (ECN) indicator in an Internet Protocol (IP) header of the at least one subsequent L4S data packet. The ECN indicator is indicative of a Congestion Experienced (CE) value.

In additional embodiments, the higher protocol layer circuit is further configured to transmit, to the lower protocol layer circuit, the marked at least one subsequent L4S data packet.

In more embodiments, to detect the congestion, the lower protocol layer circuit is further configured to determine a count of the one or more L4S data packets in the L4S data queue, and compare the count of the one or more L4S data packets with a threshold count. The congestion is detected based on the count of the one or more L4S data packets exceeding the threshold count.

In still yet more embodiments, the at least one L4S data flow corresponds to a downstream L4S data flow indicative of a source address associated with another network device and a destination address associated with a wireless device, and wherein the congestion signal comprises at least one of the source address or the destination address.

In numerous embodiments, the lower protocol layer circuit is further configured to transmit an L4S capability indicating that the network device is capable of signaling L4S congestion by way of an Explicit Congestion Notification (ECN) indicator in an Internet Protocol (IP) header.

In numerous additional embodiments, the L4S capability is transmitted in at least one of: a Beacon frame, a Probe Response frame, or a management frame.

In several embodiments, the congestion signal is transmitted via at least one of a Medium Access Control (MAC) Layer Management Entity (MLME) interface or a MAC Service Access Point (MAC SAP) interface or a Station Management Entity (SME) interface.

In another aspect of the present disclosure, a network device is provided. The network device comprises a lower protocol layer circuit and a higher protocol layer circuit coupled to the lower protocol layer circuit. The lower protocol layer circuit is configured to maintain a receive buffer to buffer for one or more upstream data packets of at least one upstream Low Latency, Low Loss, and Scalable throughput (L4S) data flow. Further, the lower protocol layer circuit is configured to detect a congestion in the receive buffer and transmit, to the higher protocol layer circuit, a congestion signal configured to indicate the detected congestion.

In several more embodiments, the higher protocol layer circuit is configured to receive the congestion signal and the one or more upstream data packets from the lower protocol layer circuit, mark, based on the received congestion signal, at least one upstream data packet of the one or more upstream data packets to indicate the detected congestion, and transmit, to another network device, the marked at least one upstream data packet.

In various embodiments, the marking of the at least one upstream data packet to indicate the detected congestion comprises setting a congestion indicator associated with the at least one upstream data packet to a preset value.

In some more embodiments, the congestion signal comprises at least one of: a congestion experienced flag, a direction indicating the congestion in upstream, a User Priority (UP) associated with a set of upstream data packets of the one or more upstream data packets in the receive buffer that is experiencing the detected congestion, a Traffic Identifier (TID) associated with the set of upstream data packets, or a Stream Classification Service (SCS) Identifier (SCSID) for an SCS stream associated with the set of upstream data packets.

In numerous embodiments, prior to transmitting the congestion signal, the lower protocol layer circuit is further configured to determine at least one of: a first congestion marking count that identifies a count of the set of upstream data packets that is experiencing the congestion, a second congestion marking count that identifies a count of upstream data packets of the one or more upstream data packets to mark for the congestion, an L4S congestion marking probability that identifies a probability of marking the at least one upstream data packet for the congestion, a first percentage of packets that identifies a percentage of upstream data packets in the receive buffer for which the congestion is experienced, or a second percentage of packets that identifies a percentage of upstream data packets of the one or more upstream data packets to mark for the congestion. The congestion signal is further configured to indicate the determined at least one of: the first congestion marking count, the second congestion marking count, the L4S congestion marking probability, the first percentage of packets, or the second percentage of packets.

In yet another aspect of the present disclosure, a method is provided. The method comprises maintaining, by a lower protocol layer circuit, a Low Latency, Low Loss, and Scalable throughput (L4S) data queue. The L4S data queue buffers one or more L4S data packets of at least one L4S data flow for transmission. The method further comprises detecting, by the lower protocol layer circuit, a congestion in the L4S data queue, and transmitting, by the lower protocol layer circuit, a congestion signal to a higher protocol layer circuit. The congestion signal indicates the detected congestion.

Other objects, advantages, novel features, and further scope of applicability of the present disclosure will be set forth in part in the detailed description to follow, and in part will become apparent to those skilled in the art upon examination of the following or may be learned by practice of the disclosure. Although the description above contains many specificities, these should not be construed as limiting the scope of the disclosure but as merely providing illustrations of some of the presently preferred embodiments of the disclosure. As such, various other embodiments are possible within its scope. Accordingly, the scope of the disclosure should be determined not by the embodiments illustrated, but by the appended claims and their equivalents.

### BRIEF DESCRIPTION OF DRAWINGS

The above, and other, aspects, features, and advantages of several embodiments of the present disclosure will be more apparent from the following description as presented in conjunction with the following several figures of the drawings.
FIG. 1 is a conceptual network diagram of various environments in which a congestion management logic can operate on a plurality of network devices in accordance with various embodiments of the disclosure;
FIG. 2 is a conceptual depiction of a network stack in accordance with various embodiments of the disclosure;
FIG. 3 is a conceptual block diagram of a communication network for an L4S congestion signaling in accordance with various embodiments of the disclosure;
FIG. 4 is a conceptual block diagram of another communication network for the L4S congestion signaling in accordance with various embodiments of the disclosure;
FIG. 5 is a flowchart depicting a process for transmitting a congestion signal in accordance with various embodiments of the disclosure;
FIG. 6 is a flowchart depicting a process for transmitting the congestion signal to a higher protocol layer circuit in accordance with various embodiments of the disclosure;
FIG. 7 is a flowchart depicting another process for transmitting the congestion signal to the higher protocol layer circuit in accordance with various embodiments of the disclosure;
FIG. 8 is a flowchart depicting a process for marking congestion in an L4S data flow in accordance with various embodiments of the disclosure;
FIG. 9 is a flowchart depicting a process for setting a congestion indicator to a preset value in accordance with various embodiments of the disclosure;
FIG. 10 is a flowchart depicting another process for setting the congestion indicator to the preset value in accordance with various embodiments of the disclosure;
FIG. 11 is a flowchart depicting yet another process for transmitting the congestion signal to the higher protocol layer circuit in accordance with various embodiments of the disclosure;
FIG. 12 is a flowchart depicting a process for transmitting one or more upstream data packets to a network device in accordance with various embodiments of the disclosure; and
FIG. 13 is a conceptual block diagram of a device suitable for configuration with a congestion management logic in accordance with various embodiments of the disclosure.

Corresponding reference characters indicate corresponding components throughout the several figures of the drawings. Elements in the several figures are illustrated for simplicity and clarity and have not necessarily been drawn to scale. For example, the dimensions of some of the elements in the figures might be emphasized relative to other elements for facilitating understanding of the various presently disclosed embodiments. In addition, common, but well-understood, elements that are useful or necessary in a commercially feasible embodiment are often not depicted in order to facilitate a less obstructed view of these various embodiments of the present disclosure.

### DETAILED DESCRIPTION

In response to the issues described above, devices and methods are discussed herein for congestion signaling in a communication network. In numerous examples, the communication network may include at least one network device, at least one Access Point (AP), and at least one wireless device. In an example, the AP may correspond to a device that enables communication between the network device and the wireless device using a wireless technology. For example, the network device may correspond to at least one of: a server or a database that is associated with at least one of a real-time application or a near-real-time application. The wireless device may correspond to a mobile computing device that includes at least one of: a smartphone, a tablet, a laptop/notebook, a wearable device, or the like. In an example, the wireless device may be the mobile computing device that executes the real-time application (or the near-real-time application) on a client side.

In various examples, in order to improve the performance of the real-time application or the near-real-time application, the communication network may support a Low Latency, Low Loss, and Scalable throughput (L4S) feature. In an example, the L4S feature may be supported by the network device, the AP, and/or the wireless device. For example, when the network device and/or the wireless device support the L4S feature, the network device and/or the wireless device may transmit an L4S capability to the AP. In numerous examples, the L4S capability may indicate that the network device and/or the wireless device is capable of receiving and/or transmitting an L4S data flow.

In numerous additional examples, if the AP receives the L4S capability from the network device and/or the wireless device, the AP may enable the L4S feature associated with the AP. In an example, when the L4S feature is enabled, the AP may function as a dual queue-coupled Active Queue Management (AQM) system. For example, the function of the dual queue-coupled AQM system may include permitting, based on the L4S capability signal, an exchange of the L4S data flow between the network device and the wireless device. Further, the function of the dual queue-coupled AQM system may include allowing a higher protocol layer of a network stack to update packet headers of data packets of the L4S data flow for facilitating Explicit Congestion Notification (ECN) signaling. In an example, the network stack may correspond to an Open Systems Interconnection (OSI) model. For example, the higher protocol layer may correspond to one of: a network layer of the OSI model or a transport layer of the OSI model. Furthermore, the function of the dual queue-coupled AQM system may include allowing a lower protocol layer of the network stack to isolate L4S data traffic and non-L4S data traffic of the L4S data flow. In numerous examples, the lower protocol layer may isolate the L4S and non-L4S data traffic of the L4S data flow by utilizing a dual queue (e.g., an L4S data queue and a classic data queue). In an example, the lower protocol layer may correspond to a data link layer of the OSI model.

In various examples, when congestion occurs in the dual queue, the lower protocol layer may lack permission to modify packet headers of the higher protocol layer to indicate the congestion due to protocol boundary restrictions between the lower protocol layer and the higher protocol layer. Moreover, modifying the packet headers for congested data packets may be a complex and challenging process. For example, the modification of the packet headers may involve decrypting and dequeuing encrypted packets, updating packet headers, and then re-encrypting and requeuing the data packets. This process is not only time-consuming but also a resource-intensive process, potentially causing significant delays in the ECN signaling.

To this end, in a number of embodiments, a congestion management logic is provided. In various embodiments, the congestion management logic may enable the AP to suppress the delays in the ECN signaling without violating the protocol boundary restrictions between the lower protocol layer and the higher protocol layer. In a variety of embodiments, the congestion management logic may be implemented by a lower protocol layer circuit of the AP and/or a higher protocol layer circuit of the AP. For example, the higher protocol circuit may correspond to a circuit (e.g., a chipset, a network card, or the like) that is configured to implement one of a network layer protocol or a transport layer protocol. In an example, the lower protocol circuit may correspond to a circuit that is configured to implement a Media Access Control (MAC) protocol.

In several embodiments, if the L4S feature is enabled on the AP, the lower protocol circuit may be configured to transmit an L4S capability indicating that the AP is capable of signaling L4S congestion by way of an ECN indicator in an Internet Protocol (IP) header. In several examples, the L4S capability may be transmitted to the network device and/or the wireless device in at least one of a Beacon frame, a Probe Response frame, or a management frame. In several more examples, based on the transmission of the L4S capability, the lower protocol circuit may be configured to receive, from the wireless device (and/or the network device) L4S capability indicating that the wireless device (or the network device) is capable of transmitting (or receiving) the L4S data flow.

In many embodiments, the lower protocol layer circuit may be configured to maintain an L4S data queue. In many additional embodiments, the maintaining of the L4S data queue may include enqueuing or buffering one or more L4S data packets of at least one L4S data flow into the L4S data queue and/or dequeuing buffered L4S data packets from the L4S data queue for transmission. In many further embodiments, the maintaining of the L4S data queue may further include recording a count of L4S data packets enqueued in the L4S data queue and/or a count of L4S data packets dequeued from the L4S data queue. In various examples, the L4S data flow may be a downstream L4S data flow.

In further embodiments, the lower protocol layer circuit may be configured to detect whether congestion is experienced in the L4S data queue. In further examples, in order to detect whether the congestion is experienced in the L4S data queue, the lower protocol layer circuit may determine a queue depth associated with the L4S data queue. In numerous examples, the queue depth may represent a count of L4S data packets that are currently buffered in the L4S data queue. In an example, the queue depth may be determined by subtracting the count of dequeued L4S data packets from the count of enqueued L4S data packets. Upon detecting the queue depth, the lower protocol layer circuit may determine whether the queue depth exceeds a threshold count by comparing the queue depth with the threshold count. In an example, if the queue depth exceeds the threshold count, the lower protocol layer circuit may detect that the congestion is experienced in the L4S data queue. Conversely, if the queue depth does not exceed the threshold count, the lower protocol layer circuit may detect that the congestion is not experienced in the L4S data queue.

In still further embodiments, if the congestion is experienced in the L4S data queue, the lower protocol layer circuit may be configured to transmit a congestion signal to the higher protocol layer circuit. In various examples, the congestion signal may be transmitted via at least one of a Medium Access Control (MAC) Layer Management Entity (MLME) interface or a Station Management Entity (SME) interface. In numerous examples, the congestion signal may be configured to indicate that the congestion is experienced in the L4S data queue. In other words, the congestion signal may include an L4S-Congestion Experienced (CE) indication indicating that the congestion is experienced in the L4S data queue.

In still yet further embodiments, prior to transmitting the congestion signal, the lower protocol layer circuit may identify, from the L4S data packets in the L4S data queue, a set of L4S data packets that is experiencing the congestion. Upon identifying the set of L4S data packets, the lower protocol layer circuit may generate at least one Access Category (AC) Information Element (IE). In various examples, the AC IE may indicate at least one of: a congestion experienced flag, a priority associated with the set of L4S data packets, a direction indicating the congestion in downstream, or a Stream Classification Service (SCS) Identifier (SCSID) for an SCS stream associated with the set of L4S data packets. In an example, the priority may include at least one of a User Priority (UP) value associated with the set of L4S data packets or a Traffic Identifier (TID) associated with the set of L4S data packets. Upon generating the AC IE, the lower protocol layer circuit may transmit, to the higher protocol layer circuit, the congestion signal that includes the AC IE.

In more embodiments, prior to transmitting the congestion signal, the lower protocol layer circuit may determine at least one of a source address associated with the L4S data flow or a destination address associated with the L4S data flow. Further, the lower protocol layer circuit may generate at least one of a source address IE indicating the source address or a destination address IE indicating the destination address. Furthermore, the lower protocol layer circuit may transmit, to the higher protocol layer circuit, the congestion signal that includes at least one of the source address IE or the destination address IE.

In still more embodiments, prior to transmitting the congestion signal, the lower protocol layer circuit may further determine at least one of an L4S congestion marking probability that identifies a probability of marking at least one subsequent L4S data packet of the L4S data flow for the congestion or a classic queue drop probability identifying a likelihood of packet drop in a classic/non-L4S data queue. In an example, the L4S congestion marking probability and/or the classic queue drop probability may be determined based on at least one of: the queue depth associated with the L4S data queue, a queue depth associated with the classic data queue, or a coupling factor between the L4S data queue and the classic data queue. Further, the lower protocol layer circuit may generate at least one of an L4S congestion marking probability IE and/or a classic queue drop probability IE indicating the L4S congestion marking probability and/or the classic queue drop probability, respectively. Furthermore, the lower protocol layer circuit may transmit, to the higher protocol layer circuit, the congestion signal that includes the marking probability IE and/or the drop probability IE. In one or more embodiments, the congestion signal may further include L4S congestion information identifying additional information related to the detected congestion.

In yet more embodiments, prior to transmitting the congestion signal, the lower protocol layer circuit may determine at least one of a first congestion marking count, a second congestion marking count, a first percentage of packets, or a second percentage of packets. The first congestion marking count may identify a count of the set of L4S data packets experiencing the congestion. The second congestion marking count may identify a count of subsequent L4S data packets of the L4S data flow to mark for the congestion. The first percentage of packets may identify a percentage of L4S data packets in the L4S data queue for which the congestion is experienced. The second percentage of packets may identify a percentage of subsequent L4S data packets of the L4S data flow to mark for the congestion. In an example, the second congestion marking count and the second percentage of packets may be determined or set based on at least one of: the first congestion marking count, the L4S congestion marking probability, the classic queue drop probability, or the first percentage of packets. Upon setting the second congestion marking count and the second percentage of packets, the lower protocol layer circuit may generate a first count IE indicating the first congestion marking count, a second count IE indicating the second congestion marking count, a first percentage IE indicating the first percentage of packets, and a second percentage IE indicating the second percentage of packets. Further, the lower protocol layer circuit may transmit, to the higher protocol layer circuit, the congestion signal that includes at least one of the first count IE, the second count IE, the first percentage IE, and the second percentage IE.

In still yet more embodiments, prior to transmitting the congestion signal, the lower protocol layer circuit may receive a Received Signal Strength Indicator (RSSI) value associated with the wireless device. Upon receiving the RSSI value, the lower protocol layer circuit may compare the RSSI value with a threshold RSSI value to determine whether the RSSI value exceeds the threshold RSSI value. In an example, if the RSSI value exceeds the threshold RSSI value, the lower protocol layer circuit may determine a first value for setting the congestion marking count. Conversely, if the RSSI value does not exceed the threshold RSSI value, the lower protocol layer circuit may determine a second value that is lower than the first value. Further, the lower protocol layer circuit may set the congestion marking count based on one of: the first value or the second value. Furthermore, the lower protocol layer circuit may transmit, to the higher protocol layer circuit, the congestion signal that includes the count IE indicating the congestion marking count.

In additional embodiments, upon receiving the congestion signal, the higher protocol layer circuit may be configured to mark one or more subsequent L4S data packets of the L4S data flow to indicate the congestion. In additional examples, in order to mark the subsequent L4S data packets to indicate the congestion, the higher protocol layer circuit may be configured to determine, based on the congestion signal, a type of L4S data packets of the L4S data flow that is experiencing the congestion. In various examples, the type of L4S data packets may be determined based on the AC IE element included in the congestion signal. Upon determining the type of L4S data packets, the higher protocol layer circuit may be configured to extract, from the L4S data flow, a set of subsequent L4S data packets that corresponds to the determined type. Upon extracting the set of subsequent L4S data packets, the higher protocol layer circuit may set a congestion indicator (e.g., an ECN indicator) associated with each subsequent L4S data packet of the set of subsequent L4S data packets to a preset value (e.g., a CE value of '11'). Upon setting the congestion indicator, the higher protocol layer circuit may be configured to transmit the set of subsequent L4S data packets to the lower protocol layer circuit.

In still additional embodiments, prior to setting the congestion indicator to the preset value, the higher protocol layer circuit may be configured to determine, based on the congestion signal, at least one of the second congestion marking count or the second percentage of packets to mark the congestion. In various examples, the second congestion marking count may be determined based on the second count IE and the second percentage of packets may be determined based on the second percentage IE. Upon determining the second congestion marking count or the second percentage of packets, the higher protocol layer circuit may be configured to extract, from the set of subsequent L4S data packets, a subset of subsequent L4S data packets such that a count of the subset of subsequent L4S data packets is equal to the determined second congestion marking count or equivalent to the second percentage of packets. Further, the higher protocol layer circuit may be configured to set the congestion indicator associated with each subsequent L4S data packet of the subset of subsequent L4S data packets to the preset value. Furthermore, the higher protocol layer circuit may be configured to transmit, to the lower protocol layer circuit, the set of subsequent L4S data packets including the subset of subsequent L4S data packets.

Though the above description is provided for signaling the higher protocol layer circuit by the lower protocol layer circuit regarding congestion in downstream, the scope of the disclosure is not limited to it. In a similar manner as described for the downstream L4S data flow, the lower protocol layer circuit can also signal the higher protocol layer circuit regrading congestion in upstream, for example, one or more upstream L4S data flows whose data packets are buffered in a receive buffer maintained at the lower protocol layer circuit. Based on the signaling, the higher protocol layer may mark a requisite number of upstream L4S data packets with a congestion indicator before transmitting the upstream L4S data packets to another network device.

Advantageously, detecting the congestion in the L4S data queue may trigger the lower protocol layer circuit to transmit, to the higher protocol layer circuit, the congestion signal that is configured to indicate the congestion. The transmission of the congestion signal may trigger the higher protocol layer circuit to mark the subsequent L4S data packets of the L4S data flow to indicate the congestion. As a result, the delays in the congestion signaling (e.g., the ECN signaling in the headers of the data packets) may be suppressed without violating the protocol boundaries between the lower protocol layer circuit and the higher protocol layer circuit. Accordingly, the higher protocol layer circuit and/or the lower protocol layer circuit may enable the communication network to fully leverage the benefits of L4S.

Aspects of the present disclosure may be embodied as an apparatus, system, method, or computer program product. Accordingly, aspects of the present disclosure may take the form of an entirely hardware embodiment, an entirely software embodiment (including firmware, resident software, micro-code, or the like) or an embodiment combining software and hardware aspects that may all generally be referred to herein as a "function," "module," "apparatus," or "system." Furthermore, aspects of the present disclosure may take the form of a computer program product embodied in one or more non-transitory computer-readable storage media storing computer-readable and/or executable program code. Many of the functional units described in this specification have been labeled as functions, in order to emphasize their implementation independence more particularly. For example, a function may be implemented as a hardware circuit comprising custom VLSI circuits or gate arrays, off-the-shelf semiconductors such as logic chips, transistors, or other discrete components. A function may also be implemented in programmable hardware devices such as via field programmable gate arrays, programmable array logic, programmable logic devices, or the like.

Functions may also be implemented at least partially in software for execution by various types of processors. An identified function of executable code may, for instance, comprise one or more physical or logical blocks of computer instructions that may, for instance, be organized as an object, procedure, or function. Nevertheless, the executables of an identified function need not be physically located together but may comprise disparate instructions stored in different locations which, when joined logically together, comprise the function and achieve the stated purpose for the function.

Indeed, a function of executable code may include a single instruction, or many instructions, and may even be distributed over several different code segments, among different programs, across several storage devices, or the like. Where a function or portions of a function are implemented in software, the software portions may be stored on one or more computer-readable and/or executable storage media. Any combination of one or more computer-readable storage media may be utilized. A computer-readable storage medium may include, for example, but not limited to, an electronic, magnetic, optical, electromagnetic, infrared, or semiconductor system, apparatus, or device, or any suitable combination of the foregoing, but would not include propagating signals. In the context of this document, a computer readable and/or executable storage medium may be any tangible and/or non-transitory medium that may contain or store a program for use by or in connection with an instruction execution system, apparatus, processor, or device.

Computer program code for carrying out operations for aspects of the present disclosure may be written in any combination of one or more programming languages, including an object-oriented programming language such as Python, Java, Smalltalk, C++, C#, Objective C, or the like, conventional procedural programming languages, such as the "C" programming language, scripting programming languages, and/or other similar programming languages. The program code may execute partly or entirely on one or more of a user's computer and/or on a remote computer or server over a data network or the like.

A component, as used herein, comprises a tangible, physical, non-transitory device. For example, a component may be implemented as a hardware logic circuit comprising custom VLSI circuits, gate arrays, or other integrated circuits; off-the-shelf semiconductors such as logic chips, transistors, or other discrete devices; and/or other mechanical or electrical devices. A component may also be implemented in programmable hardware devices such as field programmable gate arrays, programmable array logic, programmable logic devices, or the like. A component may comprise one or more silicon integrated circuit devices (e.g., chips, die, die planes, packages) or other discrete electrical devices, in electrical communication with one or more other components through electrical lines of a printed circuit board (PCB) or the like. Each of the functions and/or modules described herein, in certain embodiments, may alternatively be embodied by or implemented as a component.

A circuit, as used herein, comprises a set of one or more electrical and/or electronic components providing one or more pathways for electrical current. In certain embodiments, a circuit may include a return pathway for electrical current, so that the circuit is a closed loop. In another embodiment, however, a set of components that does not include a return pathway for electrical current may be referred to as a circuit (e.g., an open loop). For example, an integrated circuit may be referred to as a circuit regardless of whether the integrated circuit is coupled to ground (as a return pathway for electrical current) or not. In various embodiments, a circuit may include a portion of an integrated circuit, an integrated circuit, a set of integrated circuits, a set of non-integrated electrical and/or electrical components with or without integrated circuit devices, or the like. In one embodiment, a circuit may include custom VLSI circuits, gate arrays, logic circuits, or other integrated circuits; off-the-shelf semiconductors such as logic chips, transistors, or other discrete devices; and/or other mechanical or electrical devices. A circuit may also be implemented as a synthesized circuit in a programmable hardware device such as field programmable gate array, programmable array logic, programmable logic device, or the like (e.g., as firmware, a netlist, or the like). A circuit may comprise one or more silicon integrated circuit devices (e.g., chips, die, die planes, packages) or other discrete electrical devices, in electrical communication with one or more other components through electrical lines of a printed circuit board (PCB) or the like. Each of the functions and/or modules described herein, in certain embodiments, may be embodied by or implemented as a circuit.

Reference throughout this specification to "one embodiment," "an embodiment," or similar language means that a particular feature, structure, or characteristic described in connection with the embodiment is included in at least one embodiment of the present disclosure. Thus, appearances of the phrases "in one embodiment," "in an embodiment," and similar language throughout this specification may, but do not necessarily, all refer to the same embodiment, but mean "one or more but not all embodiments" unless expressly specified otherwise. The terms "including," "comprising," "having," and variations thereof mean "including but not limited to", unless expressly specified otherwise. An enumerated listing of items does not imply that any or all of the items are mutually exclusive and/or mutually inclusive, unless expressly specified otherwise. The terms "a," "an," and "the" also refer to "one or more" unless expressly specified otherwise.

Further, as used herein, reference to reading, writing, storing, buffering, and/or transferring data can include the entirety of the data, a portion of the data, a set of the data, and/or a subset of the data. Likewise, reference to reading, writing, storing, buffering, and/or transferring non-host data can include the entirety of the non-host data, a portion of the non-host data, a set of the non-host data, and/or a subset of the non-host data.

Lastly, the terms "or" and "and/or" as used herein are to be interpreted as inclusive or meaning any one or any combination. Therefore, "A, B or C" or "A, B and/or C" mean "any of the following: A; B; C; A and B; A and C; B and C; A, B and C." An exception to this definition will occur only when a combination of elements, functions, steps, or acts are in some way inherently mutually exclusive.

Aspects of the present disclosure are described below with reference to schematic flowchart diagrams and/ or schematic block diagrams of methods, apparatuses, systems, and computer program products according to embodiments of the disclosure. It will be understood that each block of the schematic flowchart diagrams and/or schematic block diagrams, and combinations of blocks in the schematic flowchart diagrams and/or schematic block diagrams, can be implemented by computer program instructions. These computer program instructions may be provided to a processor of a computer or other programmable data processing apparatus to produce a machine, such that the instructions, which execute via the processor or other programmable data processing apparatus, create means for implementing the functions and/or acts specified in the schematic flowchart diagrams and/or schematic block diagrams block or blocks.

It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. Other steps and methods may be conceived that are equivalent in function, logic, or effect to one or more blocks, or portions thereof, of the illustrated figures. Although various arrow types and line types may be employed in the flowchart and/or block diagrams, they are understood not to limit the scope of the corresponding embodiments. For instance, an arrow may indicate a waiting or monitoring period of unspecified duration between enumerated steps of the depicted embodiment.

In the following detailed description, reference is made to the accompanying drawings, which form a part thereof. The foregoing summary is illustrative only and is not intended to be in any way limiting. In addition to the illustrative aspects, embodiments, and features described above, further aspects, embodiments, and features will become apparent by reference to the drawings and the following detailed description. The description of elements in each figure may refer to elements of proceeding figures. Like numbers may refer to like elements in the figures, including alternate embodiments of like elements.

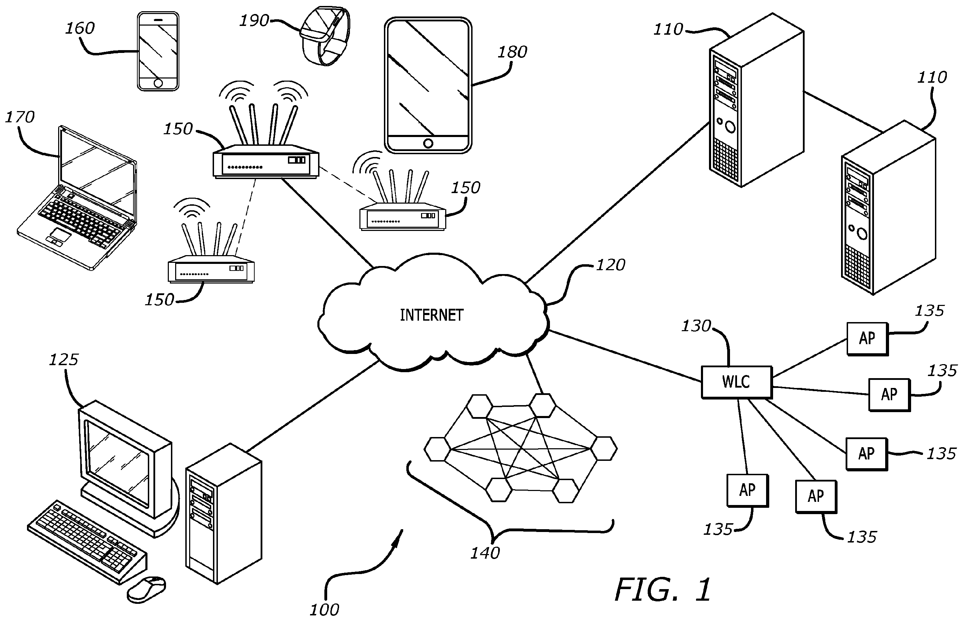

Referring to FIG. 1, a conceptual network diagram 100 of various environments in which a congestion management logic can operate on a plurality of network devices in accordance with various embodiments of the disclosure is shown. Those skilled in the art will recognize that the congestion management logic may include various hardware and/or software deployments and may be configured in a variety of ways. In various embodiments, the congestion management logic may be configured to detect, at a lower protocol layer of a network stack, congestion associated with a Low Latency, Low Loss, and Scalable throughput (L4S) data flow and communicate the detected congestion to a higher protocol layer of the network stack. In many embodiments, the congestion management logic may be configured as a standalone device, exist as a logic in another network device, be distributed among various network devices operating in tandem, or be remotely operated as part of a cloud-based network management tool. In further embodiments, one or more servers 110 may be configured with the congestion management logic or may otherwise operate as the congestion management logic. In many further embodiments, the congestion management logic may operate on the one or more servers 110 connected to a communication network 120. The communication network 120 may include wired networks or wireless networks. In many additional embodiments, the congestion management logic may be provided as a cloud-based service that may service remote networks, such as, but not limited to a deployed network 140.

However, in additional embodiments, the congestion management logic may be operated as a distributed logic across multiple network devices. In the embodiments depicted in FIG. 1, a plurality of Access Points (APs) 150 may operate as the congestion management logic in a distributed manner or may have one specific device operate as the congestion management logic for all of the neighboring or sibling APs 150. The APs 150 may facilitate Wi-Fi connections for various electronic devices, such as but not limited to, wireless devices 160 - 190 including at least one laptop computer 170, at least one cellular phone 160, at least one portable tablet computer 180, and at least one wearable computing device 190.

In numerous embodiments, the congestion management logic may be integrated within another network device. In an example, a wireless LAN controller (WLC) 130 may be configured with the congestion management logic or may otherwise operate as the congestion management logic. The WLC 130 may control operations associated with a set of APs 135 that are connected, either wired or wirelessly, to the WLC 130. In more embodiments, a personal computer 125 may be utilized to access and/or manage various aspects of the congestion management logic, either remotely or within the network itself. In the embodiments depicted in FIG. 1, the personal computer 125 communicates over the communication network 120 and may access the congestion management logic of the servers 110, the APs 150, or the WLC 130.

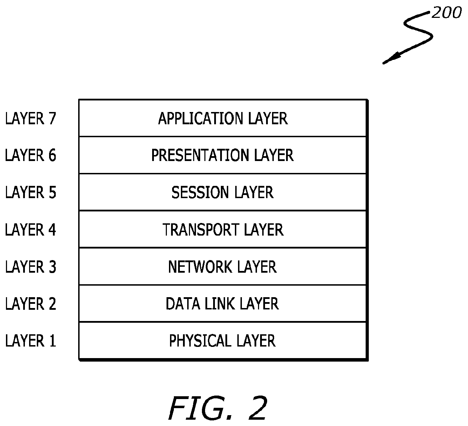

Although a specific embodiment for various environments that the congestion management logic may operate on a plurality of network devices suitable for carrying out the various steps, processes, methods, and operations described herein is discussed with respect to FIG. 1, any of a variety of systems and/or processes may be utilized in accordance with embodiments of the disclosure. In many non-limiting examples, the congestion management logic may be provided as a device or software separate from the network devices or the congestion management logic may be integrated into the network devices. The elements depicted in FIG. 1 may also be interchangeable with other elements of FIGS. 2 - 13 as required to realize a particularly desired embodiment.

Referring to FIG. 2, a conceptual depiction of a network stack 200 in accordance with various embodiments of the disclosure is shown. In many embodiments, the network stack 200 may be utilized to carry out various communications described or required herein. In still more embodiments, the network stack 200 may be configured as the Open Systems Interconnection (OSI) model, more commonly known as the OSI model. Likewise, the network stack 200 may have seven layers which may be implemented in accordance with the OSI model.

In the embodiment depicted in FIG. 2, the network stack 200 may include a physical layer as a first layer (denoted as "Layer 1" in FIG. 2). The physical layer may serve as the foundational layer among the seven layers. The physical layer is responsible for the transmission and reception of raw, unstructured data bits over a physical medium, such as cables or wireless connections. At this layer, the focus is on the electrical, mechanical, and procedural characteristics of the hardware, including cables, connectors, and signaling. The primary goal is to establish a reliable and efficient means of physically transmitting data between devices. The physical layer does not concern itself with the meaning or interpretation of the data; instead, it concentrates on the fundamental aspects of transmitting binary information, addressing issues like voltage levels, data rates, and modulation techniques. Devices operating at the physical layer include network cables, connectors, repeaters, and hubs. The physical layer's successful operation is fundamental to the functioning of the entire OSI model, as it forms the bedrock upon which higher layers build their more complex communication protocols and structures.

In some embodiments, the network stack 200 may include a data link layer as a second layer (donated as "Layer 2" in FIG. 2). The data link layer may be configured to be primarily concerned with the reliable and efficient transmission of data between directly connected devices over a particular physical medium. Its responsibilities include framing data into frames, addressing, error detection, and, in some cases, error correction. The data link layer is divided into two sublayers: Logical Link Control (LLC) and Media Access Control (MAC). The LLC sublayer manages flow control and error checking, while the MAC sublayer is responsible for addressing devices on the network and controlling access to the physical medium. Ethernet is a common example of a data link layer protocol. This layer ensures that data is transmitted without errors and manages the flow of frames between devices on the same local network. Bridges and switches operate at the data link layer, making forwarding decisions based on MAC addresses. Overall, the data link layer plays a crucial role in creating a reliable point-to-point or point-to-multipoint link for data transmission between neighboring network devices.

In various embodiments, the network stack 200 may include a network layer as a third layer (denoted as "Layer 3" in FIG. 2). The network layer may be configured as a pivotal component responsible for the establishment of end-to-end communication across interconnected networks. Its primary functions include logical addressing, routing, and the fragmentation and reassembly of data packets. The network layer ensures that data is efficiently directed from the source to the destination, even when the devices are not directly connected. IP (Internet Protocol) is a prominent example of a network layer protocol. Devices known as routers operate at this layer, making decisions on the optimal path for data to traverse through a network based on logical addressing. The network layer abstracts the underlying physical and data link layers, allowing for a more scalable and flexible communication infrastructure. In essence, it provides the necessary mechanisms for devices in different network segments to communicate, contributing to the end-to-end connectivity that is fundamental to the functioning of the Internet and other large-scale networks.

In additional embodiments, the network stack 200 may include a transport layer as a fourth layer (denoted as "Layer 4" in FIG. 2). The transport layer may be a critical element responsible for the end-to-end communication and reliable delivery of data between devices. Its primary objectives include error detection and correction, flow control, and segmentation and reassembly of data. Two key transport layer protocols are Transmission Control Protocol (TCP) and User Datagram Protocol (UDP). TCP ensures reliable and connection-oriented communication by establishing and maintaining a connection between sender and receiver, and it guarantees the orderly and error-free delivery of data through mechanisms like acknowledgment and retransmission. UDP, on the other hand, offers a connectionless and more lightweight approach suitable for applications where speed and real-time communication take precedence over reliability. The transport layer shields the upper-layer protocols from the complexities of the network and data link layers, providing a standardized interface for applications to send and receive data, making it a crucial facilitator for efficient, end-to-end communication in networked environments.

In further embodiments, the network stack 200 may include a session layer as a fifth layer (denoted as "Layer 5" in FIG. 2). The session layer may be configured to play a pivotal role in managing and controlling communication sessions between applications. It provides mechanisms for establishing, maintaining, and terminating dialogues or connections between devices. The session layer helps synchronize data exchange, ensuring that information is sent and received in an orderly fashion. Additionally, it supports functions such as checkpointing, which allows for the recovery of data in the event of a connection failure, and dialog control, which manages the flow of information between applications. While the session layer is not as explicitly implemented as lower layers, its services are crucial for maintaining the integrity and coherence of data during interactions between applications. By managing the flow of data and establishing the context for communication sessions, the session layer contributes to the overall reliability and efficiency of data exchange in networked environments.

In still further embodiments, the network stack 200 may include a presentation layer as a sixth layer (denoted as "Layer 6" in FIG. 2). The presentation layer may focus on the representation and translation of data between the application layer and the lower layers of the network stack 200. It can deal with issues related to data format conversion, ensuring that information is presented in a standardized and understandable manner for both the sender and the receiver. The presentation layer is often responsible for tasks such as data encryption and compression, which enhance the security and efficiency of data transmission. By handling the transformation of data formats and character sets, the presentation layer facilitates seamless communication between applications running on different systems. This layer may then abstract the complexities of data representation, enabling applications to exchange information without worrying about differences in data formats. In essence, the presentation layer plays a crucial role in ensuring interoperability and data integrity between diverse systems and applications within a networked environment.

In numerous embodiments, the network stack 200 may include an application layer as a seventh layer (denoted as "Layer 7" in FIG. 2). The application layer may serve as the interface between the network and the software applications that end-users interact with It can provide a platform-independent environment for communication between diverse applications and ensures that data exchange is meaningful and understandable. The application layer can encompass a variety of protocols and services that support functions such as file transfers, email, remote login, and web browsing. It acts as a mediator, allowing different software applications to communicate seamlessly across a network. Some well-known application layer protocols include HTTP (Hypertext Transfer Protocol), FTP (File Transfer Protocol), and SMTP (Simple Mail Transfer Protocol). In essence, the application layer enables the development of network-aware applications by defining standard communication protocols and offering a set of services that facilitate robust and efficient end-to-end communication across networks.

Although a specific embodiment for the network stack 200 is described above with respect to FIG. 2, any of a variety of systems and/or processes may be utilized in accordance with embodiments of the disclosure. For example, various aspects described herein may reside or be carried out on one layer, or a plurality of layers. The elements depicted in FIG. 2 may also be interchangeable with other elements of FIG. 1 and FIGS. 3 - 13 as required to realize a particularly desired embodiment.

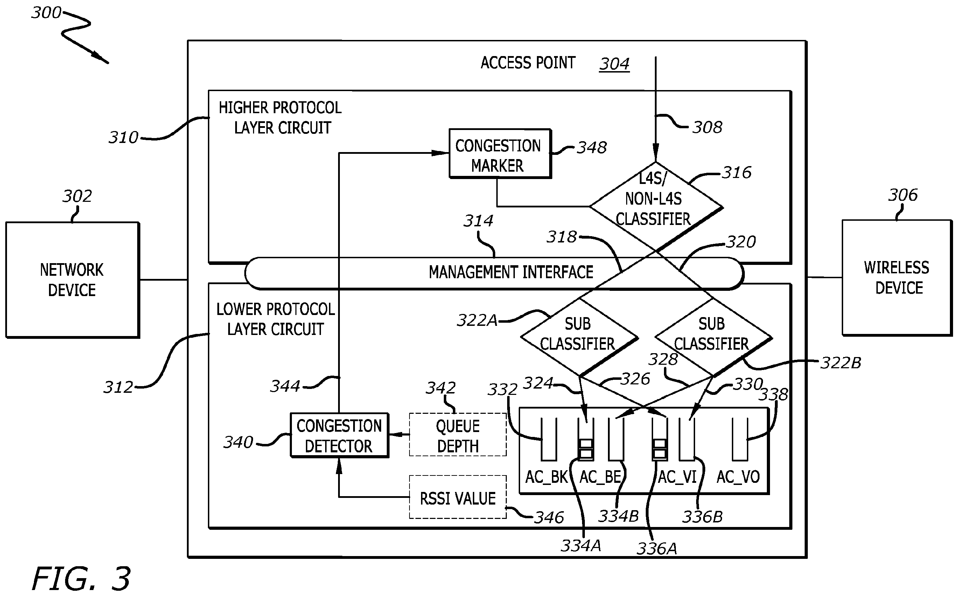

Referring to FIG. 3, a conceptual block diagram of a communication network 300 for an L4S congestion signaling in accordance with various embodiments of the disclosure is shown. In the embodiments shown in FIG. 3, the communication network 300 may include a network device 302, an AP 304, and a wireless device 306. In a number of embodiments, the AP 304 may correspond to a device that enables communication between the network device 302 and the wireless device 306 using at least one wireless technology (e.g., Wi-Fi). As used herein, the network device 302 may correspond to at least one of: a server or a database that is associated with at least one application. For example, the application may correspond to a real-time application or a near-real-time application. In an example, the real-time application (or the near-real-time application) may include a streaming video application, a multiplayer gaming application, or the like. In some embodiments, the network device 302 may correspond to an intermediate network device (e.g., a switch, a router, another AP, etc.) that connects the AP 304 to a server or a database associated with the at least one application. As used herein, the wireless device 306 may correspond to a mobile computing device that includes at least one of: a smartphone, a tablet, a laptop/notebook, a wearable device, a client station ("STA"), or the like. For example, the wireless device 306 may be the mobile computing device that executes the real-time application (or the near-real-time application) on a client side.

In a variety of embodiments, in order to improve the performance of the real-time application or the near-real-time application, the communication network 300 may support an L4S feature. For example, the L4S feature may be supported by the network device 302, the AP 304, and/or the wireless device 306. In an example, when the network device 302 and/or the wireless device 306 support the L4S feature, the network device 302 and/or the wireless device 306 may be configured to transmit an L4S capability to the AP 304. In various examples, the L4S capability may be configured to indicate that the network device 302 and/or the wireless device 306 is capable of receiving and/or transmitting one or more L4S data flows, for example, an L4S data flow 308 shown in FIG. 3.

In numerous examples, the L4S data flow 308 may correspond to a data flow that includes at least one L4S data packet. As used herein, the L4S data packet may correspond to a data packet that is configured to indicate an L4S support in a header of the data packet. For example, the L4S support may be indicated in a congestion indicator of the header. Specifically, the L4S support may be indicated in an Explicit Congestion Notification (ECN) indicator located within a Traffic Class (TCLAS) byte (or a Type of Service (ToS) byte) of the header. For example, the ECN indicator may include two bits that are configured to indicate the L4S support. In an example, when the bits of the ECN indicator correspond to a first preset value (e.g., an ECN-Capable Transport (ECT) (option 1) value of '01'), then the ECN indicator may indicate the L4S support. In more examples, the L4S data flow 308 may correspond to a data flow that can support early congestion detection and notification. In some more examples, the L4S data flow 308 may correspond to a data flow in which a sender can continually or dynamically adapt a transmission rate associated with the sender based on the congestion.

In various embodiments, the L4S data flow 308 may be configured to indicate a source address and a destination address. In various examples, the L4S data flow 308 may be a downstream L4S data flow that is configured to indicate the source address as an identifier (e.g., a MAC address) of the network device 302 and the destination address as an identifier (e.g., a MAC address) of the wireless device 306. In some more examples, the L4S data flow 308 may be an upstream L4S data flow that is configured to indicate the source and destination addresses as the identifiers of the wireless device 306 and the network device 302, respectively.

In many embodiments, when the AP 304 supports the L4S feature, the AP 304 may be configured to function as a dual queue-coupled Active Queue Management (AQM) system. For example, the function of the dual queue-coupled AQM system may include permitting, based on the L4S capability, an exchange of the L4S data flow 308 between the network device 302 and the wireless device 306. Further, the function of the dual queue-coupled AQM system may include maintaining data queues to enqueue one or more data packets of the L4S data flow 308 for transmission. In numerous examples, the data packets of the L4S data flow 308 may be enqueued to prevent data packet loss caused by the congestion and/or transmission rate differences between the network device 302 and the wireless device 306. In numerous additional examples, the data packets of the L4S data flow 308 may be enqueued based on the L4S support associated with each of the data packets. Furthermore, the function of the dual queue-coupled AQM system may include implementing a congestion management logic. In various examples, the congestion management logic may be configured to actively detect and notify the congestion associated with the L4S data flow 308. In several embodiments, if the L4S feature is enabled on the AP 304, the AP 304 may transmit an L4S capability indicating that the AP 304 is capable of signaling L4S congestion by way of an ECN indicator in an Internet Protocol (IP) header. In several examples, the L4S capability may be transmitted to the network device 302 and/or the wireless device 306 in at least one of a Beacon frame, a Probe Response frame, or a management frame.

In many further embodiments, the AP 304 may include a higher protocol layer circuit 310 and a lower protocol layer circuit 312 that is communicatively coupled to the higher protocol layer circuit 310. In various examples, the higher protocol layer circuit 310 and/or the lower protocol layer circuit 312 may be configured to perform one or more functions of the dual queue-coupled AQM system. As used herein, the higher protocol layer circuit 310 may correspond to a circuit (e.g., a chipset, a network card, or the like) that is configured to implement one of a network layer protocol, a transport layer protocol, or any other higher protocol layer above Layer 2. As used herein, the lower protocol layer circuit 312 may correspond to a circuit that is configured to implement a data link layer protocol. Specifically, the lower protocol layer circuit 312 may be configured to implement a MAC protocol. In several examples, the L4S capability may be transmitted to the network device 302 and/or the wireless device 306 by the lower protocol layer circuit 312. Additionally, the AP 304 may include a management interface 314. As used herein, the management interface 314 may correspond to a communication interface that enables the lower protocol layer circuit 312 to communicate to the higher protocol layer circuit 310. In an example, the management interface 314 may correspond to a MAC Service Access Point (SAP) interface.

In more embodiments, the management interface 314 may be an MAC layer management entity (MLME). The MLME may handle higher MAC functions including, for example, synchronization, power management, and connection management, which include association and authentication. The MLME may manage channel access rules and algorithms, ensuring that the network devices can appropriately gain access to the shared communication medium. The MLME may also manage beacon frames in the wireless communication network and control whether the network devices utilize Carrier Sense Multiple Access (CSMA)/Collision Avoidance (CA), CSMA/Collision Detection (CD), or other access mechanisms. The MLME may communicate with the lower protocol layer circuit 312, for example, a MAC sublayer, and handle higher-level management functions and decisions that influence the operation of the MAC sublayer. The MLME may also communicate with the higher protocol layer circuit 310 to inform the higher protocol layer circuit 310 about the state of the wireless communication network, any security procedures, or changes in a network topology. In additional embodiments, the higher protocol layer circuit 310 and the lower protocol layer circuit 312 may communicate with each other by exchanging service primitives through the management interface 314.

In further embodiments, the higher protocol layer circuit 310 may be configured to receive the L4S data flow 308. In an example, the L4S data flow 308 may correspond to the downstream L4S data flow received from the network device 302. In various examples, upon receiving the L4S data flow 308, the higher protocol layer circuit 310 may be configured to classify the data packets of the L4S data flow 308. Specifically, an L4S/non-L4S classifier 316 embodied within the higher protocol layer circuit 310 may be configured to classify the data packets of the L4S data flow 308.

In still further embodiments, the L4S/non-L4S classifier 316 may be configured to classify, based on ECN indicators associated with the data packets, the data packets of the L4S data flow 308 into at least one of L4S data packets 318 or non-L4S data packets 320. For example, if the ECN indicators of the data packets indicate the first preset value (e.g., the ECT (option 1) value of '01'), the L4S/non-L4S classifier 316 may classify the data packets as the L4S data packet 318. Additionally, or alternatively, if the ECN indicators of the data packets indicate a second preset value (e.g., an ECT (option 0) value of '10') and/or a third preset value (e.g., Not-ECT value of '00'), the L4S/non-L4S classifier 316 may classify the data packets as the non-L4S data packet 320.

In still yet further embodiments, upon classifying the data packets of the L4S data flow 308, the higher protocol layer circuit 310 may be configured to forward the L4S data packets 318 and/or the non-L4S data packets 320 to the lower protocol layer circuit 312. In various examples, the L4S data packets 318 and/or the non-L4S data packets 320 may be forwarded to the lower protocol layer circuit 312 via the management interface 314. Upon receiving the L4S data packets 318 and/or the non-L4S data packets 320, the lower protocol layer circuit 312 may be configured to classify the L4S data packets 318 and/or the non-L4S data packets 320 for queueing. Specifically, a plurality of sub-classifiers 322A and 322B embodied within the lower protocol layer circuit 312 may be configured to classify the L4S data packets 318 and/or the non-L4S data packets 320 for queueing.

In further additional embodiments, upon receiving the L4S data packets 318, a first sub-classifier 322A of the plurality of sub-classifiers 322A and 322B may be configured to classify the L4S data packets 318 into at least one Access Category (AC). In an example, the at least one AC may include a background AC, a best-effort AC, a video AC, and/or a voice AC. For the embodiments shown in FIG. 3, the first sub-classifier 322A may classify the L4S data packets 318 into at least one of L4S best-effort data packets 324 or L4S video data packets 326. In various examples, the L4S data packets 318 may be classified based on a priority associated with the L4S data packets 318. In an example, the priority may correspond to at least one of a Traffic Identifier (TID) associated with the L4S data packets 318 or a User Priority (UP) value associated with the L4S data packets 318. In some more examples, the L4S data packets 318 may include one or more data packets of a Stream Classification Service (SCS) stream assigned to a specific Quality of Service (QoS) AC. In these examples, the L4S data packets 318 may be classified based on an SCS Identifier (SCSID) of the SCS stream associated with the L4S data packets 318. Similarly, upon receiving the non-L4S data packets 320, a second sub-classifier 322B of the plurality of sub-classifiers 322A and 322B may classify the non-L4S data packets 320 into at least one of non-L4S best-effort data packets 328 or non-L4S video data packets 330.

In more embodiments, upon classifying the L4S data packets 318 and/or the non-L4S data packets 320 for queuing, the lower protocol layer circuit 312 may be configured to enqueue one or more of the L4S best-effort data packets 324, the L4S video data packets 326, the non-L4S best-effort data packets 328, or the non-L4S video data packets 330 into one or more data queues 332 - 338. In various examples, the one or more data queues 332 - 338 may be embodied within the lower protocol layer circuit 312. In an example, the one or more data queues 332 - 338 may correspond to AQM queues that are configured to buffer the L4S best-effort data packets 324, the L4S video data packets 326, the non-L4S best-effort data packets 328, and/or the non-L4S video data packets 330.

For the embodiments shown in FIG. 3, the one or more data queues 332 - 338 may include a classic background data queue 332, an L4S best-effort data queue 334A, a classic best-effort data queue 334B, an L4S video data queue 336A, a classic video data queue 336B, and/or a classic voice data queue 338. In various examples, the lower protocol layer circuit 312 may enqueue the L4S best-effort data packets 324 and/or the L4S video data packets 326 into the L4S best-effort data queue 334A and/or the L4S video data queue 336A, respectively. In other words, the L4S best-effort data queue 334A and the L4S video data queue 336A may be configured to buffer the L4S best-effort data packets 324 and the L4S video data packets 326, respectively. Similarly, the lower protocol layer circuit 312 may enqueue the non-L4S best-effort data packets 328 and/or the non-L4S video data packets 330 into the classic best-effort data queue 334B and/or the classic video data queue 336B, respectively. In further embodiments, multiple L4S and non-L4S queues may be deployed for different priority levels such as separate queues for best effort, video, or voice priority levels.

In still more embodiments, upon enqueuing the L4S best-effort data packets 324 and/or the L4S video data packets 326, the lower protocol layer circuit 312 may be configured to detect whether congestion is experienced in the L4S best-effort data queue 334A and/or the L4S video data queue 336A, respectively. Specifically, a congestion detector 340 embodied within the lower protocol layer circuit 312 may be configured to detect whether the congestion is experienced in the L4S best-effort data queue 334A and/or the L4S video data queue 336A. Hereinafter, considering the L4S video data queue 336A as a non-limiting example, the congestion detection in the L4S video data queue 336A is described.

In yet more embodiments, in order to detect whether the congestion is experienced in the L4S video data queue 336A, the congestion detector 340 may be configured to acquire a queue depth 342 associated with the L4S video data queue 336A. As used herein, the queue depth 342 may correspond to a count of L4S video data packets that are currently buffered in the L4S video data queue 336A. In an example, the queue depth 342 may be acquired from a queuing recorder that records a count of L4S video data packets enqueued into the L4S video data queue 336A and/or a count of L4S video data packets dequeued from the L4S video data queue 336A. For example, the queue depth 342 may represent the count of L4S video data packets, determined by subtracting the count of dequeued L4S video data packets from the count of enqueued L4S video data packets. In various examples, the queuing recorder may be embodied within lower protocol layer circuit 312 but outside the congestion detector 340. In some more examples, the queuing recorder may be embodied within the congestion detector 340. For example, the congestion detector may function as the queuing recorder. In this example, the queue depth 342 may be determined by the congestion detector 340.

In still yet more embodiments, upon acquiring (or determining) the queue depth 342, the congestion detector 340 may be configured to determine a threshold count for the L4S video data queue 336A. In various examples, the threshold count may be determined based on network conditions associated with the communication network 300, network demand associated with the communication network 300, QoS requirements associated with the communication network 300, or the like. In more examples, the threshold count may be determined based on a priority associated with data packets enqueued in the L4S video data queue 336A. In some more examples, the threshold count may be determined based on user input provided by an operator, a developer, or the like. In further examples, the threshold count may be a pre-configured value.

In additional embodiments, upon determining the threshold count, the congestion detector 340 may be configured to compare the queue depth 342 with the threshold count to determine whether the queue depth 342 exceeds the threshold count. For example, if the queue depth 342 exceeds the threshold count, the congestion detector 340 may detect that the congestion is experienced in the L4S video data queue 336A. Conversely, if the queue depth 342 does not exceed the threshold count, the congestion detector 340 may detect that the congestion is not experienced in the L4S video data queue 336A.

In still additional embodiments, if the congestion is detected in the L4S video data queue 336A, the congestion detector 340 may be configured to transmit a congestion signal 344 to the higher protocol layer circuit 310. In various embodiments, the congestion signal 344 may be configured to indicate the detected congestion. For example, the congestion signal 344 may include a congestion experienced flag which can be set when the congestion is detected, and a direction which can be set to indicate that the congestion is experienced in downstream. In other words, the congestion signal 344 may include an L4S-Congestion Experienced (CE) indication (also referred to as a "northbound primitive") indicating that the congestion is experienced in the lower protocol layer circuit 312. In an example, the congestion signal 344 may be transmitted to the higher protocol layer circuit 310 via the management interface 314. For example, the congestion signal 344 may be transmitted via at least one of: an MLME interface or a Station Management Entity (SME) interface. Alternatively, if the congestion is not detected in the L4S video data queue 336A, the congestion detector 340 may prohibit the transmission of the congestion signal 344.

In still yet additional embodiments, prior to transmitting the congestion signal 344, the congestion detector 340 may be configured to identify, in the L4S video data queue 336A, a set of L4S video data packets that is experiencing the congestion. In various examples, the congestion detector 340 may identify, as a part of the set of L4S video data packets, an L4S video data packet that is buffered above the threshold count in the L4S video data queue 336A. Upon identifying the set of L4S video data packets, the congestion detector 340 may be configured to generate at least one AC Information Element (IE) indicating at least one of the priority (e.g., the UP value and/or the TID) associated with the set of L4S video data packets or the SCSID associated with the set of L4S video data packets. Further, the congestion detector 340 may transmit, to the higher protocol layer circuit 310, the congestion signal 344 that includes the AC IE. Additionally, in some more examples, the congestion signal 344 may include at least one of the source or destination addresses indicated by the L4S data flow 308.

In many additional embodiments, prior to transmitting the congestion signal 344, the congestion detector 340 may be configured to determine a first congestion marking count identifying a count of the identified set of L4S video data packets that is experiencing the congestion and/or a first percentage of packets identifying a percentage of L4S video data packets in the L4S video data queue 336A for which the congestion is experienced. Upon determining the first congestion marking count and/or the first percentage of packets, the congestion detector 340 may be configured to generate a first count IE indicating the first congestion marking count and a first percentage IE indicating the first percentage of packets.

Upon determining the first congestion marking count and/or the first percentage of packets, the congestion detector 340 may be configured to set (or determine) a second congestion marking count and/or a second percentage of packets. The second congestion marking count may identify a count of subsequent L4S video data packets to mark for the congestion. Likewise, the second percentage of packets may identify a percentage of subsequent L4S video data packets to mark for the congestion. In an example, the second congestion marking count may be a function of the first congestion marking count and/or the first percentage of packets. In various examples, the second congestion marking count may be equal to the first congestion marking count. In some more examples, the second congestion marking count may be greater than (or lesser than) the first congestion marking count by a determined value. In further examples, the second percentage of packets may be a function of the first congestion marking count of the identified set of L4S video data packets and/or the first percentage of packets. In various examples, the second percentage of packets may be equal to the first percentage of packets. In some more examples, the second percentage of packets may be greater than (or lesser than) the first percentage of packets by a determined value. Upon setting the second congestion marking count and/or the second percentage of packets, the congestion detector 340 may be configured to generate a second count IE indicating the second congestion marking count and a second percentage IE indicating the second percentage of packets. Further, the congestion detector 340 may transmit, to the higher protocol layer circuit 310, the congestion signal 344 that includes at least one of the first count IE, the first percentage IE, the second count IE, or the second percentage IE.

In numerous additional embodiments, prior to transmitting the congestion signal 344, the congestion detector 340 may be configured to receive a Received Signal Strength Indicator (RSSI) value 346 associated with the wireless device 306. Upon receiving the RSSI value 346, the congestion detector 340 may be configured to determine a threshold RSSI value. In various examples, the threshold RSSI value may be determined based on the network conditions and/or network demand associated with the communication network 300. In some more examples, the threshold RSSI value may be determined based on the user input. Upon determining the threshold RSSI value, the congestion detector 340 may be configured to compare the RSSI value 346 to the threshold RSSI value to obtain a comparison result. Upon obtaining the comparison result, the congestion detector 340 may be configured to set the second congestion marking count. In various examples, the second congestion marking count may be a function of the comparison result. For example, the comparison result may indicate that the RSSI value 346 is one of: greater than the threshold RSSI value, equal to the threshold RSSI value, or lesser than the threshold RSSI value. In an example, if the RSSI value 346 exceeds the threshold RSSI value, the congestion detector 340 may set a first value as the second congestion marking count. Conversely, if the RSSI value 346 does not exceed the threshold RSSI value, the congestion detector 340 may set a second value, that is lower than the first value, as the second congestion marking count. In some more examples, the second congestion marking count may be a function of the first congestion marking count of the identified set of L4S video data packets and the comparison result. Upon setting the second congestion marking count, the congestion detector 340 may transmit, to the higher protocol layer circuit 310, the congestion signal 344 that indicates the second congestion marking count.

In numerous embodiments, prior to transmitting the congestion signal 344, the congestion detector 340 may be configured to determine at least one of: an L4S congestion marking probability associated with the L4S data flow 308 for the L4S video data queue 336A or a classic queue drop probability associated with the L4S data flow 308 for the classic video data queue 336B. In an example, the L4S congestion marking probability may be determined based on a first function of at least one of: the queue depth 342 associated with the L4S video data queue 336A, a queue depth associated with the classic video data queue 336B, or a coupling factor indicating a degree of coupling between the L4S video data queue 336A and the classic video data queue 336B. The L4S congestion marking probability may identify a probability of marking at least one subsequent L4S video data packet of the L4S data flow 308 for the congestion. The classic queue drop probability may be determined based on a second function of at least one of: the queue depth 342, the queue depth associated with the classic video data queue 336B, or the coupling factor. For example, each of the first and second functions may be defined by an AQM algorithm utilized in the dual-queue coupled AQM system. The classic queue drop probability may identify a likelihood of packet drop in the classic video data queue 336B. Upon determining the L4S congestion marking probability and/or the classic queue drop probability, the congestion detector 340 may be configured to set the second congestion marking count. In an example, the second congestion marking count may be a function of the L4S congestion marking probability and/or the classic queue drop probability. Upon setting the second congestion marking count, the congestion detector 340 may generate the second count IE indicating the second congestion marking count. Further, the congestion detector 340 may generate at least one of an L4S congestion marking probability IE and/or a drop probability IE indicating the L4S congestion marking probability and/or the classic queue drop probability, respectively. Furthermore, the congestion detector 340 may transmit, to the higher protocol layer circuit 310, the congestion signal 344 that includes at least one of the second count IE, the L4S congestion marking probability IE, or the drop probability IE. By way of a non-limiting example, the L4S congestion detector 326 may transmit the congestion signaling request 328 in the following format:

```
L4S-CE.indication (
      source address,
      destination address,
      direction,
      congestion experienced flag,
      priority,
      SCSID,
      number of packets,
      L4S congestion marking probability,
      percentage of packets,
      classic queue drop probability,
      L4S congestion information
      )
 
```

where,
"source address" may indicate a MAC address of the data server,
"destination address" may indicate a MAC address of the wireless device,
"direction" may indicate a downstream direction to signal that the congestion is experienced in a downstream L4S data flow,
"congestion experienced" may be a flag indicating that the congestion is detected in an L4S data queue,
"priority" may indicate at least one of a TID or a UP value associated with a set of L4S data packets that is experiencing the congestion,
"SCSID" may indicate a SCS stream associated with the set of L4S data packets that is experiencing the congestion,
"Number of packets" may indicate at least one of the first congestion marking count of L4S data packets experiencing the congestion or the second congestion marking count for marking subsequent L4S data packets for congestion,
"L4S congestion marking Probability" may indicate a probability that the set of L4S data packets should be marked with a CE value of '11',
"Percentage of packets" may indicate at least one of the first percentage of packets or the second percentage of packets,
"classic queue drop probability" may indicate a likelihood of packet drop in a non-L4S data queue associated with the L4S data queue experiencing congestion, and
"L4S congestion information" may indicate additional information related to the congestion.

In several embodiments, the higher protocol layer circuit 310 may be configured to receive the congestion signal 344 from the lower protocol layer circuit 312. Specifically, a congestion marker 348 embodied within the higher protocol layer circuit 310 may be configured to receive the congestion signal 344. In an example, the congestion signal 344 may be received from the lower protocol layer circuit 312 via the management interface 314. In various examples, the congestion marker 348 may be communicatively coupled to the L4S/non-L4S classifier 316 to mark, based on the congestion signal 344, one or more subsequent L4S data packets of the L4S data flow 308 to indicate the congestion (e.g., the CE).

In several more embodiments, in order to mark the subsequent L4S data packets of the L4S data flow 308 to indicate the congestion, the congestion marker 348 may be configured to determine, based on the congestion signal 344, a type (e.g., an AC) of L4S data packets of the L4S data flow 308 that is experiencing the congestion. In various examples, the type of L4S data packets may be determined based on the AC IE element included in the congestion signal 344. Upon determining the type of L4S data packets, the congestion marker 348 may be configured to extract, from the L4S data flow 308, a set of subsequent L4S data packets that corresponds to the determined type. Upon extracting the set of subsequent L4S data packets, the congestion marker 348 may be configured to set a congestion indicator associated with each subsequent L4S data packet of the set of subsequent L4S data packets to a fourth preset value (e.g., a CE value of '11'). In various examples, the set congestion indicator may correspond to an ECN indicator, in an IP header, indicating the CE value. Upon setting the congestion indicator, the higher protocol layer circuit 310 may be configured to transmit the set of subsequent L4S data packets to the lower protocol layer circuit 312. In an example, the set of subsequent L4S data packets may be transmitted to the lower protocol layer circuit 312 via the management interface 314.

In some more embodiments, prior to setting the congestion indicator to the fourth preset value, the congestion marker 348 may be configured to determine, based on the congestion signal, a count of subsequent L4S data packets to mark the congestion. In various examples, the count of subsequent L4S data packets may be determined based on at least one of the second count IE, the L4S congestion marking probability IE, the drop probability IE, or the second percentage IE. Upon determining the count of subsequent L4S data packets, the congestion marker 348 may be configured to extract, from the set of subsequent L4S data packets, a subset of subsequent L4S data packets such that a count of the subset of subsequent L4S data packets is equal to the determined count of subsequent L4S data packets. Further, the congestion marker 348 may be configured to set the congestion indicator associated with each subsequent L4S data packet of the subset of subsequent L4S data packets to the fourth preset value. Specifically, the congestion marker 348 may set an ECN indicator in an IP header associated with each subsequent L4S data packet of the subset of subsequent L4S data packets to indicate the CE value. Upon setting the congestion indicator, the higher protocol layer circuit 310 may be configured to transmit, to the lower protocol layer circuit 312, the set of subsequent L4S data packets including the subset of subsequent L4S data packets that is marked.

In this way, the lower protocol layer circuit 312 may be configured to detect the congestion in the L4S video data queue 336A and transmit the congestion signal 344 to the higher protocol layer circuit 310. The transmission of the congestion signal 344 may enable the higher protocol layer circuit 310 to mark at least one subsequent L4S data packet of the L4S data flow 308 to indicate the congestion. As a result, delays in the congestion signaling (e.g., the ECN signaling in the headers of the data packets) may be suppressed without violating protocol boundaries between the lower protocol layer circuit 312 and the higher protocol layer circuit 310. Accordingly, the higher protocol layer circuit 310 and/or the lower protocol layer circuit 312 may enable the communication network 300 to fully leverage the benefits of L4S.

Although a specific embodiment of the communication network 300 is described above with respect to FIG. 3, any of a variety of systems and/or processes may be utilized in accordance with embodiments of the disclosure. For example, the lower protocol layer circuit 312 may detect congestion in the L4S best-effort data queue 334A and transmit the detected congestion to the higher protocol layer circuit 310. The transmission of the detected congestion may enable the higher protocol layer circuit 310 to mark at least one L4S subsequent data packet corresponding to the best-effort AC to indicate the detected congestion. The elements depicted in FIG. 3 may also be interchangeable with other elements of FIGS. 1 - 2 and FIGS. 4 - 13 as required to realize a particularly desired embodiment.

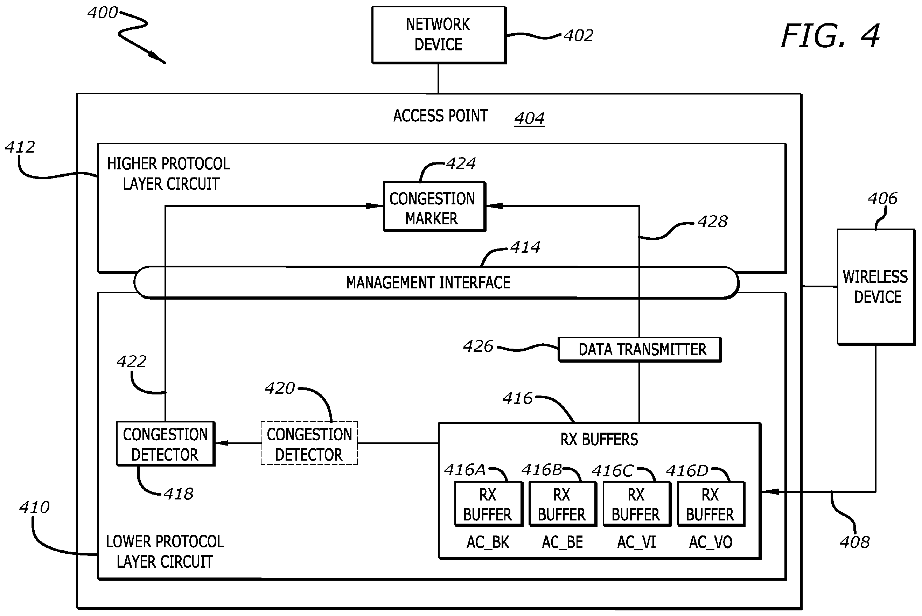

Referring to FIG. 4, a conceptual block diagram of a communication network 400 for an L4S congestion signaling in accordance with various embodiments of the disclosure is shown. In the embodiments shown in FIG. 4, the communication network 400 may include a network device 402, an AP 404, and a wireless device 406. In a variety of embodiments, the communication network 400 may support an L4S feature. For example, the L4S feature may be supported by the network device 402, the AP 404, and/or the wireless device 406. In an example, when the L4S feature is enabled on the network device 402 and/or the wireless device 406, the network device 402 and/or the wireless device 406 may be configured to transmit a first L4S capability signal to the AP 404. In various examples, the first L4S capability signal may be configured to indicate that the network device 402 and/or the wireless device 406 is capable of receiving and/or transmitting an L4S data flow 408.

In a number of embodiments, upon receiving the first L4S capability signal from the wireless device 406 (and/or the network device 402), the AP 404 may be configured to determine that the wireless device 406 (and/or the network device 402) is capable of transmitting (and/or receiving) the L4S data flow 408. In an example, upon determining that the wireless device 406 is capable of transmitting the L4S data flow 408, the AP 404 may be configured to turn on the L4S feature, supported by the AP 404, for the wireless device 406. Upon turning on the L4S feature for the wireless device 406, the AP 404 may be configured to transmit, to the wireless device 406, a second L4S capability indicating that the AP 404 is capable of signaling L4S congestion by way of an ECN indicator in an IP header. In several examples, the L4S capability may be transmitted to the network device 402 and/or the wireless device 406 in at least one of a Beacon frame, a Probe Response frame, or a management frame.

In many embodiments, the AP 404 may include a lower protocol layer circuit 410 and a higher protocol layer circuit 412 that is communicatively coupled to the lower protocol layer circuit 410. As used herein, the lower protocol layer circuit 410 may correspond to a circuit that is configured to implement a Layer 2 protocol (e.g., a MAC protocol). As used herein, the higher protocol layer circuit 412 may correspond to a circuit that is configured to implement one of a network layer protocol, a transport layer protocol, or any other higher layer protocol above Layer 2. In an example, the L4S capability may be transmitted to the network device 402 and/or the wireless device 406 by the lower protocol layer circuit 410. Additionally, the AP 404 may include a management interface 414 that enables communication between the lower protocol layer circuit 410 and the higher protocol layer circuit 412. In an example, the management interface 414 may correspond to a MAC SAP interface.

In many further embodiments, the lower protocol layer circuit 410 may be configured to receive the L4S data flow 408. In many examples, the L4S data flow 408 may correspond to an upstream L4S data flow received from the wireless device 406. Upon receiving the L4S data flow 408, the lower protocol layer circuit 410 may be configured to determine at least one AC associated with upstream data packets of the L4S data flow 408. In an example, the AC may be determined as at least one of: a background AC, a best-effort AC, a video AC, or a voice AC. In various examples, the AC may be determined based on a priority associated with the upstream data packets. For example, the priority may correspond to one of a TID associated with the upstream data packets or a UP value associated with the upstream data packets. In some more examples, the upstream data packets may include one or more data packets of an SCS stream assigned to a specific QoS AC. In these examples, the AC may be determined based on an SCSID of the SCS stream.

In further embodiments, upon determining the AC associated with the upstream data packets, the lower protocol layer circuit 410 may be configured to enqueue the upstream data packets into one or more receive buffers 416 (denoted as "Rx buffers" in FIG. 4). In various examples, the receive buffers 416 may be embodied within the lower protocol layer circuit 410. For the embodiments shown in FIG. 4, the receive buffers 416 may include first through fourth receive buffers 416A - 416D. In an example, if the AC associated with the upstream data packets is determined as the background AC, the lower protocol layer circuit 410 may be configured to enqueue the upstream data packets of the L4S data flow 408 into the first receive buffer 416A. Similarly, if the AC is determined as the best-effort AC, the video AC, or the voice AC, the lower protocol layer circuit 410 may be configured to enqueue the upstream data packets into the second receive buffer 416B, the third receive buffer 416C, or the fourth receive buffer 416D, respectively.

In still further embodiments, upon enqueueing the upstream data packets, the lower protocol layer circuit 410 may be configured to detect whether congestion is experienced in the receive buffers 416. Specifically, a congestion detector 418 embodied within the lower protocol layer circuit 410 may be configured to detect whether the congestion is experienced in the receive buffers 416. Hereinafter, considering the second receive buffer 416B as a non-limiting example, the congestion detection in the second receive buffer 416B is described.

In still yet further embodiments, in order to detect whether the congestion is experienced in the second receive buffer 416B, the congestion detector 418 may be configured to acquire a buffer depth 420 associated with the second receive buffer 416B. In an example, the buffer depth 420 may indicate a count of upstream data packets that are currently buffered in the second receive buffer 416B. Upon acquiring the buffer depth 420, the congestion detector 418 may be configured to determine a threshold count for the second receive buffer 416B. In various examples, the threshold count may be determined based on a priority associated with upstream data packets buffered in the second receive buffer 416B. In some more examples, the threshold count may be a pre-configured value.

In further additional embodiments, upon determining the threshold count, the congestion detector 418 may be configured to determine whether the buffer depth 420 exceeds the determined threshold count by comparing the buffer depth 420 and the determined threshold count. In an example, if the buffer depth 420 exceeds the determined threshold count, the congestion detector 418 may detect that the congestion is experienced in the second receive buffer 416B. Conversely, if the buffer depth 420 does not exceed the determined threshold count, the congestion detector 418 may detect that the congestion is not experienced in the second receive buffer 416B.

In additional embodiments, if the congestion is detected in the second receive buffer 416B, the congestion detector 418 may be configured to transmit a congestion signal 422 to the higher protocol layer circuit 412 via the management interface 414. For example, the congestion signal 422 may be transmitted via an MLME interface. In various examples, the congestion signal 422 may correspond to an L4S-CE indication indicating that the congestion is experienced in the lower protocol layer circuit 410. Alternatively, if the congestion is not detected in the second receive buffer 416B, the congestion detector 418 may prohibit the transmission of the congestion signal 422.

In still additional embodiments, prior to transmitting the congestion signal 422, the congestion detector 418 may be configured to identify, in the second receive buffer 416B, a first set of upstream data packets that is experiencing the congestion. Upon identifying the first set of upstream data packets, the congestion detector 418 may be configured to determine a first congestion marking count of the first set of upstream data packets and/or a first percentage of packets identifying a percentage of the first set of upstream data packets experiencing congestion. Upon determining the first congestion marking count of the first set of upstream data packets, the congestion detector 418 may be configured to set a second congestion marking count. In an example, the second congestion marking count may be a function of the first congestion marking count or the first percentage of packets. The second congestion marking count may identify a count of upstream L4S data packets of the L4S data flow 408 to mark for the congestion. Upon setting the second congestion marking count, the congestion detector 418 may be configured to transmit, to the higher protocol layer circuit 412, the congestion signal 422 that indicates one or more of: a source address associated with the L4S data flow 408, a destination address associated with the L4S data flow 408, a congestion experienced flag, a direction which can be set to indicate that the congestion is experienced in upstream, a priority (e.g., UP or TID) associated with the first set of upstream data packets, an SCSID of a SCS stream associated with the first set of upstream data packets, the first congestion marking count, the second congestion marking count, or the first percentage of packets. In an example, the source address and the destination address may correspond to MAC addresses.

In still yet additional embodiments, the congestion detector 418 may be configured to determine an L4S congestion marking probability associated with the L4S data flow 408 for the second receive buffer 416B. In an example, the L4S congestion marking probability may be determined based on the buffer depth 420. In various examples, the L4S congestion marking probability may indicate a likelihood that the first set of upstream data packets should be marked for the congestion. Upon determining the L4S congestion marking probability, the congestion detector 418 may be configured to transmit, to the higher protocol layer circuit 412, the congestion signal 422 that further indicates the L4S congestion marking probability. In one or more embodiments, the congestion detector 418 may be configured to determine a second percentage of the upstream data packets of the L4S data flow 408 that should be marked for the congestion. In an example, the second percentage of the upstream data packets may be determined based on the buffer depth 420. Upon determining the second percentage of the upstream data packets, the congestion detector 418 may be configured to transmit, to the higher protocol layer circuit 412, the congestion signal 422 that further indicates the second percentage of the upstream data packets of the L4S data flow 408 that should be marked for the congestion. In many additional embodiments, the congestion signal 422 may correspond to the L4S-CE indication that is in the following format:

```
 L4S-CE.indication(
         source address,
         destination address,
         direction,
         congestion experienced flag,
         priority,
          SCSID,
         Number of packets,
         L4S congestion marking probability,
         Percentage of packets,
         L4S congestion information
 )
```

where,
"source address" may indicate a MAC address of the wireless device 406,
"destination address" may indicate a MAC address of the network device 402,
"direction" may indicate an upstream direction to signal that the congestion is experienced in the upstream L4S data flow,
"priority" may indicate one of a TID or a UP value associated with the first set of upstream data packets (e.g., upstream L4S data packets) that is experiencing the congestion,
"SCSID" may indicate the SCS stream associated with the first set of upstream data packets that is experiencing the congestion,
"Number of packets" may indicate at least one of the first congestion marking count or the second congestion marking count,
"L4S congestion marking probability" may indicate a probability that the first set of upstream data packets should be marked with the CE value of '11',
"Percentage of packets" may indicate the first percentage of upstream data packets that should be marked for the congestion, or the second percentage of upstream data packets that are experiencing congestion, and
"L4S congestion information" may indicate additional information related to the congestion.

In more embodiments, the lower protocol layer circuit 410 may further include a data transmitter 424 that is communicatively coupled to the receive buffers 416. In various examples, upon (or prior to) transmitting the congestion signal 422, the data transmitter 424 may be configured to identify a second set of upstream data packets 426 that is currently buffered in the second receive buffer 416B. Upon identifying the second set of upstream data packets 426, the data transmitter 424 may be configured to transmit, to the higher protocol layer circuit 412, the second set of upstream data packets 426 via the management interface 414.

In still more embodiments, the higher protocol layer circuit 412 may be configured to receive the second set of upstream data packets 426. Specifically, a congestion marker 428 embodied in the higher protocol layer circuit 412 may be configured to receive the second set of upstream data packets 426. Upon receiving the second set of upstream data packets 426, the congestion marker 428 may be configured to encapsulate each upstream data packet of the second set of upstream data packets 426 with an IP header. Further, the congestion marker 428 may be configured to transmit the encapsulated upstream data packets to the network device 402.

In yet more embodiments, prior to encapsulating the second set of upstream data packets 426, the congestion marker 428 may be configured to determine whether the congestion signal 422 is received for the second set of upstream data packets 426. In an example, if the congestion signal 422 is not received, the congestion marker 428 may encapsulate the second set of upstream data packets 426 without performing the L4S congestion marking. Conversely, if the congestion signal 422 is received, the congestion marker 428 may perform the L4S congestion marking for the second set of upstream data packets 426.

In still yet more embodiments, in order to perform the L4S congestion marking, the congestion marker 428 may be configured to determine, based on the congestion signal 422, a count of upstream data packets to mark the congestion. In various examples, the count of upstream data packets may be determined based on the L4S congestion marking probability, the congestion marking count, or the percentage of the upstream data packets included in the congestion signal 422. Upon determining the count of upstream data packets, the congestion marker 428 may be configured to extract, from the second set of upstream data packets 426, a subset of upstream data packets such that a count of the subset of upstream data packets is equal to the determined count of upstream data packets. Upon extracting the subset of upstream data packets, the congestion marker 428 may be configured to set, to the CE value of '11', an ECN indicator in an IP header for each upstream data packet of the subset of upstream data packets. Upon setting the ECN indicator in the IP header, the congestion marker 428 may transmit the ECN marked upstream data packets to the network device 402.

Although it is described that the congestion signal 422 corresponds to the L4S-CE indication, the scope of the present disclosure should be limited to it. In several embodiments, the congestion signal 422 may correspond to a Media Access (MA)-UNITDATA.indication. For example, upon identifying the first set of upstream data packets that is experiencing the congestion, the congestion detector 418 may be configured to transmit, to the higher protocol layer circuit 412, each upstream data packet of the first set of upstream data packets as the MA-UNITDATA indication. Upon receiving each MA-UNITDATA indication, the higher protocol layer circuit 412 may perform the L4S congestion marking for the corresponding upstream data packet. In a non-limiting example, the MA-UNITDATA indication may be in the following format:

```
 MA-UNITDATA.indication(
         source address,
         destination address,
         routing information,
         data,
         reception status,
         priority,
          ...
         MSDU format,
         L4S CE marking requested,
         L4S congestion marking probability
 )
```

where,
"routing information" may indicate a path through which an upstream data packet of the first set of upstream data packets was received,
"data" may indicate a payload of the upstream data packet,
"reception status" may indicate whether the upstream data packet was fully received or not,
"priority" may indicate one of a TID or a UP value associated with the upstream data packet,
"MSDU format" may indicate a format of the payload of the upstream data packet,
"L4S CE marking requested" may indicate that the upstream data packet should be marked with the CE value of '11', and
"L4S congestion marking probability" may indicate a probability that the upstream data packet should be marked with the CE value of '11'.

Although not shown in FIG. 4, in some more embodiments, the lower protocol layer circuit 410 may further include one or more AQM queues (as shown in FIG. 3) for buffering downstream data packets of a downstream L4S data flow. In these embodiments, if the congestion is detected in the AQM queues, the congestion signal 422 may be further configured to indicate the congestion in the AQM queues. In several embodiments, the congestion signal 422 may correspond to the L4S-CE indication that is in the following format:

```
 L4S-CE.indication(
         source address,
         destination address,
         priority,
          SCSID,
         DL L4S congestion marking probability,
          UL L4S congestion marking probability,
         DL L4S congestion information,
         LTL L4S congestion information
 )
```

where,
"DL L4S congestion marking probability" may indicate an L4S congestion marking probability for downstream data packets,
"UL L4S congestion marking probability" may indicate an L4S congestion marking probability for upstream data packets,
"DL L4S congestion information" may indicate additional information related to the congestion experienced at the AQM queues, and
"UL L4S congestion information" may indicate additional information related to the congestion experienced at the receive buffers.

In several more embodiments, the congestion signal 422 may correspond to the L4S-CE indication that is in the following format:

```
 L4S-CE.indication(
         source address,
         destination address,
         priority,
          SCSID,
         DL congestion information,
         UL congestion information
 )
```

where,
"DL congestion information" may indicate one of an L4S congestion marking probability for downstream data packets, a first congestion marking count of downstream data packets experiencing the congestion, a second congestion marking count of downstream data packets to mark the congestion, a first percentage of downstream data packets experiencing the congestion, or a second percentage of downstream data packets to mark the congestion, and
"UL congestion information" may indicate one of an L4S congestion marking probability for upstream data packets, a first congestion marking count of upstream data packets experiencing the congestion, a second congestion marking count of upstream data packets to mark the congestion, a first percentage of upstream data packets experiencing the congestion, or a second percentage of upstream data packets to mark the congestion.

Although a specific embodiment of the communication network 400 for carrying out the various steps, processes, methods, and operations described herein is discussed with respect to FIG. 4, any of a variety of systems and/or processes may be utilized in accordance with embodiments of the disclosure. For example, the congestion detector 418 may be further configured to set the congestion marking count based on an RSSI value associated with the wireless device 406. In one or more embodiment, a congestion signal (e.g., L4S-CE indication), from a lower protocol layer circuit to a higher protocol layer circuit, may include at least one of DL congestion information or UL congestion information depending on whether congestion is experienced in downstream, upstream, or both. For example, if congestion is experienced in downstream as described in the foregoing description of FIG. 3, the congestion signal may include one or more parameters related to DL congestion information. Further, if congestion is experienced in upstream as described in the foregoing description of FIG. 4, the congestion signal may include one or more parameters related to UL congestion information. Furthermore, if congestion is experienced in both downstream and upstream, the congestion signal may include one or more first parameters related to UL congestion information and one or more second parameters related to DL congestion information. The elements depicted in FIG. 4 may also be interchangeable with other elements of FIGS. 1 - 3 and 5 - 13 as required to realize a particularly desired embodiment.

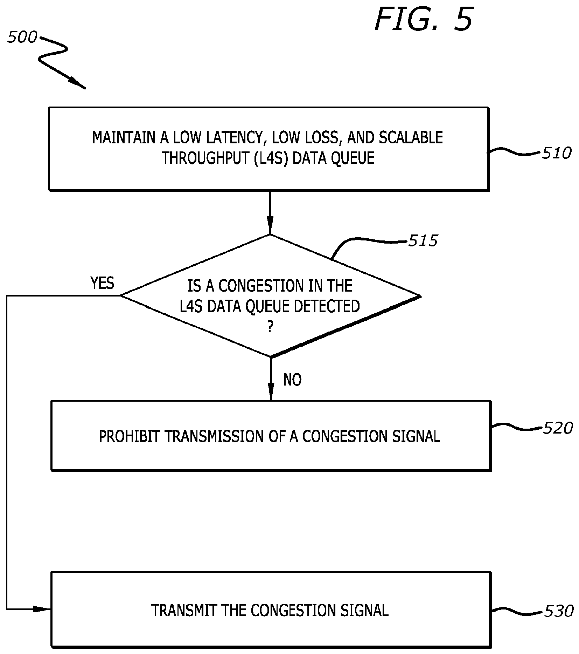

Referring to FIG. 5, a flowchart depicting a process 500 for transmitting a congestion signal in accordance with various embodiments of the disclosure is shown. In various embodiments, the process 500 may be implemented by a network device of a communication network. In various examples, the network device may correspond to an AP that is communicatively coupled to a wireless device and/or another network device (e.g., a data server). In numerous examples, the AP may include a lower protocol layer circuit and a higher protocol layer circuit. As used herein, the lower protocol layer circuit may correspond to a circuit that is configured to implement a data link layer protocol (e.g., a MAC protocol). As used herein, the higher protocol layer circuit may correspond to a circuit that is configured to implement a network layer protocol (e.g., an IP protocol). In an example, the process 500 may be implemented by the lower protocol layer circuit of the AP.

In many embodiments, the process 500 may maintain an L4S data queue (block 510). In many examples, in order to maintain the L4S data queue, the process 500 may receive an L4S data flow from the higher protocol layer circuit. For example, the L4S data flow may correspond to a downstream data flow that includes one or more L4S data packets. Upon receiving the L4S data flow, the process 500 may classify the L4S data packets into at least one AC. In an example, the AC may include one or more of a background AC, a best-effort AC, a video AC, or a voice AC. In various examples, the L4S data packets may be classified based on at least one of a priority associated with the L4S data packets or an SCSID associated with the L4S data packets. In many examples, the process 500 can receive more than one L4S data flows.

In many further embodiments, upon classifying the L4S data packets, the process 500 may determine whether the AC of the L4S data packets corresponds to an AC of the L4S data queue. In an example, if the AC of the L4S data packets corresponds to the AC of the L4S data queue, the process 500 may enqueue the L4S data packets into the L4S data queue. Consequently, the L4S data queue may buffer the L4S data packets of the L4S data flow. Conversely, if the AC of the L4S data packets does not correspond to the AC of the L4S data queue, the process 500 may enqueue the L4S data packets into another L4S data queue whose AC corresponds to the AC of the L4S data packets. In many additional embodiments, the process 500 may be configured to monitor the L4S data queue to record a count of L4S data packets enqueued in the L4S data queue and/or a count of L4S data packets dequeued from the L4S data queue. In a scenario where the process 500 receives more than one L4S data flows, the L4S data queue may buffer L4S data packets of multiple L4S data flows.

In more embodiments, the process 500 may determine whether a congestion in the L4S data queue is detected (block 515). In more examples, in order to determine whether the congestion in the L4S data queue is detected, the process 500 may determine a queue depth associated with the L4S data queue. In numerous examples, the queue depth may represent a count of L4S data packets that are currently buffered in the L4S data queue. In an example, the queue depth may be determined by subtracting the count of L4S data packets dequeued from the L4S data queue from the count of L4S data packets enqueued in the L4S data queue.

In still more embodiments, upon determining the queue depth, the process 500 may compare the queue depth with a threshold count to determine whether the queue depth exceeds the threshold count. In an example, if the queue depth exceeds the threshold count, the process 500 may determine that the congestion in the L4S data queue is detected. Conversely, if the queue depth does not exceed the threshold count, the process 500 may determine that the congestion in the L4S data queue is not detected. In still yet more embodiments, if the congestion in the L4S data queue is not detected, the process 500 may prohibit transmission of the congestion signal (block 520). In an example, the prohibition of the transmission of the congestion signal may enable the process 500 to prevent false alarms regarding the congestion in the L4S data queue.

In further embodiments, if the congestion in the L4S data queue is detected, the process 500 may transmit the congestion signal (block 530). In various examples, the process 500 at the lower protocol layer circuit may transmit the congestion signal to the higher protocol layer circuit. In numerous examples, the congestion signal may be transmitted to the higher protocol layer circuit via an MLME interface. In an example, the congestion signal may include an L4S-CE.indication primitive indicating that the congestion is detected in the L4S data queue. In further examples, the transmission of the congestion signal may trigger the higher protocol layer circuit to mark one or more subsequent L4S data packets of the L4S data flow to indicate the congestion.

In still further embodiments, prior to transmitting the congestion signal, the process 500 may identify, from the L4S data packets in the L4S data queue, a set of L4S data packets that is experiencing the congestion. Upon identifying the set of L4S data packets, the process 500 may generate at least one AC IE indicating at least one of the priority associated with the set of L4S data packets or the SCSID associated with the set of L4S data packets. Further, the process 500 may transmit the congestion signal that includes the AC IE. In an example, the transmission of the congestion signal including the AC IE may enable the higher protocol layer circuit to determine the AC of L4S data packets that are experiencing the congestion.

In still yet further embodiments, prior to transmitting the congestion signal, the process 500 may determine at least one of a source address associated with the L4S data flow or a destination address associated with the L4S data flow. Further, the process 500 may generate at least one of a source address IE indicating the source address or a destination address IE indicating the destination address. Furthermore, the process 500 may transmit the congestion signal that includes at least one of the source address IE or the destination address IE. In an example, the transmission of the congestion signal including the source and/or destination addresses may enable the higher protocol layer circuit to identify a specific L4S data flow that is experiencing the congestion.

In further additional embodiments, prior to transmitting the congestion signal, the process 500 may determine at least one of an L4S congestion marking probability associated with the L4S data flow or a classic queue drop probability associated with the L4S data flow. In an example, the L4S congestion marking probability and/or the classic queue drop probability may be determined based on at least one of: the queue depth associated with the L4S data queue, a queue depth associated with a classic data queue that is coupled to the L4S data queue, or a coupling factor between the L4S data queue and the classic data queue. Further, the process 500 may generate at least one of a marking probability IE and/or a drop probability IE indicating the L4S congestion marking probability and/or the classic queue drop probability, respectively. Furthermore, the process 500 may transmit the congestion signal that includes the marking probability IE and/or the drop probability IE. In an example, the transmission of the congestion signal including the marking probability IE and/or the drop probability IE may enable the higher protocol layer circuit to determine a congestion marking count while marking the subsequent L4S data packets of the L4S data flow to indicate the congestion.

In many additional embodiments, prior to transmitting the congestion signal, the process 500 may determine a first congestion marking count identifying a count of the identified set of L4S data packets that is experiencing the congestion, a first percentage of packets identifying a percentage of L4S data packets in the L4S data queue for which the congestion is experienced, or both. Upon determining the first congestion marking count and/or the first percentage of packets, the process 500 may generate a first count IE indicating the first congestion marking count and a first percentage IE indicating the first percentage of packets. Upon determining the first congestion marking count and/or the first percentage of packets, the process 500 may set (or determine) a second congestion marking count, a second percentage of packets, or both. The second congestion marking count may identify a count of subsequent L4S data packets to mark for the congestion. Likewise, the second percentage of packets may identify a percentage of subsequent L4S data packets to mark for the congestion. Upon setting the second congestion marking count and/or the second percentage of packets, the process 500 may generate a second count IE indicating the second congestion marking count and a second percentage IE indicating the second percentage of packets. Further, the process 500 may transmit, to the higher protocol layer circuit, the congestion signal that includes at least one of the first count IE, the first percentage IE, the second count IE, or the second percentage IE.

In a non-limiting example, the congestion signal may correspond to the L4S-CE indication that is in the following format:

```
L4S-CE.indication(
         source address,
         destination address,
         direction,
         priority,
          SCSID,
         congestion experienced
         number of packets
         percentage of packets
         L4S congestion marking probability
         L4S congestion information
 )
```

where,
"source address" may indicate a MAC address of the data server,
"destination address" may indicate a MAC address of the wireless device,
"direction" may indicate a downstream direction to signal that the congestion is experienced in the downstream L4S data flow,
"priority" may indicate one of a TID or a UP value associated with the set of L4S data packets that is experiencing the congestion,
"SCSID" may indicate a SCS stream associated with the set of L4S data packets that is experiencing the congestion,
"congestion experienced" may be a flag indicating that the congestion is detected in the L4S data queue,
"number of packets" may indicate at least one of the first congestion marking count or the second congestion marking count,
"percentage of packets" may indicate at least one of the first percentage or the second percentage,
"L4S congestion marking probability" may indicate a probability that the set of L4S data packets should be marked with a CE value of '11', and
"L4S congestion information" may indicate additional information related to the congestion.

Although a specific embodiment of the process 500 for carrying out the various steps, processes, methods, and operations described herein is discussed with respect to FIG. 5, any of a variety of systems and/or processes may be utilized in accordance with embodiments of the disclosure. For example, the process 500 may transmit, to the wireless device, the L4S data packets enqueued in the L4S data queue. The elements depicted in FIG. 5 may also be interchangeable with other elements of FIGS. 1 - 4 and 6 - 13 as required to realize a particularly desired embodiment.

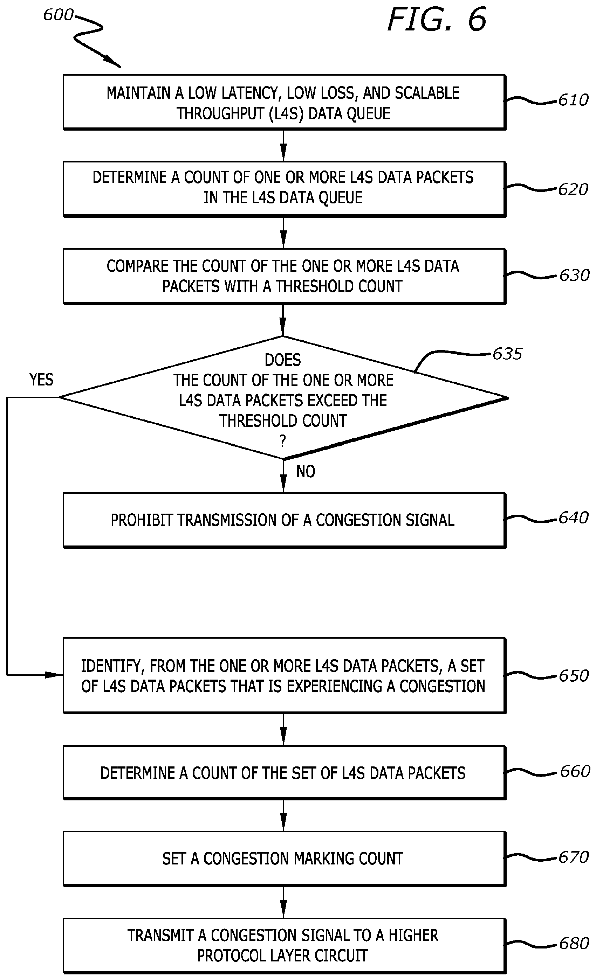

Referring to FIG. 6, a flowchart depicting a process 600 for transmitting a congestion signal to a higher protocol layer circuit in accordance with various embodiments of the disclosure is shown. In various embodiments, the process 600 may be implemented by a lower protocol layer circuit coupled to the higher protocol layer circuit. In various examples, the lower protocol layer circuit and the higher protocol layer circuit may be embodied within an AP of a communication network. For example, the lower protocol layer circuit may correspond to a circuit that is configured to implement a data link layer protocol (e.g., a MAC protocol). For example, the higher protocol layer circuit may correspond to a circuit that is configured to implement a network layer protocol (e.g., an IP protocol). In numerous examples, the higher protocol layer circuit may transmit, to the lower protocol layer circuit, an L4S data flow comprising one or more L4S data packets. In numerous additional examples, the L4S data packets should be buffered at the lower protocol layer circuit in order to process the L4S data packets for transmission and/or prevent data packet loss for the L4S data flow.

In many embodiments, the process 600 may maintain an L4S data queue (block 610). In many examples, the L4S data queue may be maintained to buffer the L4S data packets of the L4S data flow. In many additional embodiments, the maintaining of the L4S data queue may include enqueuing the L4S data packets into the L4S data queue and/or dequeuing the L4S data packets from the L4S data queue. In many further embodiments, the maintaining of the L4S data queue may include recording a count of L4S data packets enqueued in the L4S data queue and/or a count of L4S data packets dequeued from the L4S data queue.

In further embodiments, the process 600 may determine a count of L4S data packets in the L4S data queue (block 620). In further examples, the process 600 may determine the count of L4S data packets in the L4S data queue based on the count of L4S data packets enqueued in the L4S data queue and the count of L4S data packets dequeued from the L4S data queue. In an example, the count of L4S data packets in the L4S data queue may be determined by subtracting the count of L4S data packets dequeued from the L4S data queue from the count of L4S data packets enqueued in the L4S data queue.

In still further embodiments, the process 600 may compare the determined count of L4S data packets with a threshold count (block 630). In still further examples, in order to compare the determined count with the threshold count, the process 600 may determine the threshold count for the L4S data queue. In various examples, the threshold count may be determined based on network conditions and/or network demand associated with the communication network. In some more examples, the threshold count may be determined based on user input provided by an operator, a developer, or the like. Upon determining the threshold count, the process 600 may compare the determined count with the determined threshold count to obtain a comparison result. The comparison result may indicate that the determined count is one of: greater than the determined threshold count, equal to the determined threshold count, or lesser than the determined threshold count.

In still yet further embodiments, the process 600 may determine whether the determined count exceeds the threshold count (block 635). In an example, the process 600 may determine that the determined count exceeds the threshold count if the comparison result indicates that the determined count is greater than the threshold count. Conversely, the process 600 may determine that the determined count does not exceed the threshold count if the comparison result indicates that the determined count is one of: lesser than the threshold count or equal to the threshold count. In more embodiments, if the determined count does not exceed the threshold count, the process 600 may prohibit transmission of the congestion signal (block 640). In an example, the prohibition of the transmission of the congestion signal may enable the process 600 to prevent false alarms regarding congestion in the L4S data queue.

In still more embodiments, if the determined count exceeds the threshold count, the process 600 may identify, from the L4S data packets in the L4S data queue, a set of L4S data packets that is experiencing the congestion (block 650). In more examples, the set of L4S data packets may be identified based on the determined threshold count. In an example, the process 600 may identify, as a part of the set of L4S data packets, an L4S data packet that is buffered above the threshold count in the L4S data queue.

In yet more embodiments, the process 600 may determine a count of the identified set of L4S data packets (block 660). In various examples, the count of the identified set of L4S data packets may be determined based on a counter that counts a number of elements of the identified set of L4S data packets. In some more examples, the count of the identified set of L4S data packets may be determined based on the threshold count and the count of L4S data packets in the L4S data queue. In an example, the count of the identified set of L4S data packets may be determined by subtracting the threshold count from the count of L4S data packets in the L4S data queue.

In several embodiments, the process 600 may set a congestion marking count (block 670). In several examples, the congestion marking count may be set based on the count of the set of L4S data packets. In an example, the congestion marking count may be a function of the count of the set of L4S data packets. In various examples, the congestion marking count may be equal to the count of the set of L4S data packets. In some more examples, the congestion marking count may be greater than (or lesser than) the count of the set of L4S data packets by a determined value.

In several more embodiments, the process 600 may transmit the congestion signal to the higher protocol layer circuit (block 680). In several more examples, the congestion signal may be transmitted based on the set congestion marking count. In an example, upon setting the congestion marking count, the process 600 may generate a count IE indicating the congestion marking count. Further, the process 600 may transmit, to the higher protocol layer circuit, the congestion signal including the count IE. For example, the congestion signal including the count IE may be transmitted via an MLME interface.

Although a specific embodiment of the process 600 for carrying out the various steps, processes, methods, and operations described herein is discussed with respect to FIG. 6, any of a variety of systems and/or processes may be utilized in accordance with embodiments of the disclosure. For example, the process 600 may determine various additional parameters for the congestion and include one or more of these determined parameters in the congestion signal. For example, the process 600 may determine at least one of a priority, a source address, a destination address, an SCSID, L4S congestion information, an L4S congestion marking probability, or the like associated with the L4S data packets. Further, the process 600 may determine a first percentage of L4S data packets that are experiencing congestion and a second percentage of L4S data packets that should be marked for the congestion. The elements depicted in FIG. 6 may also be interchangeable with other elements of FIGS. 1 - 5 and 7 - 13 as required to realize a particularly desired embodiment.

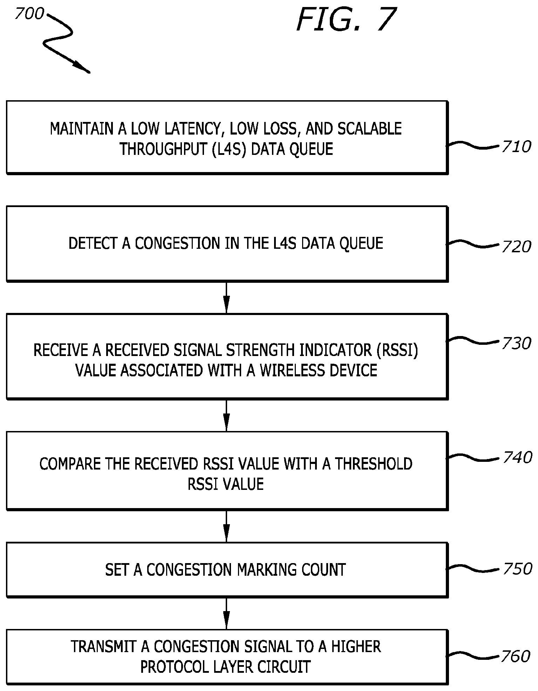

Referring to FIG. 7, a flowchart depicting a process 700 for transmitting a congestion signal to a higher protocol layer circuit in accordance with various embodiments of the disclosure is shown. In various embodiments, the process 700 may be implemented by a lower protocol layer circuit coupled to the higher protocol layer circuit. In various examples, the lower protocol layer circuit and the higher protocol layer circuit may be embodied within an AP of a communication network. For example, the lower protocol layer circuit may correspond to a circuit that is configured to implement a data link layer protocol (e.g., a MAC protocol). For example, the higher protocol layer circuit may correspond to a circuit that is configured to implement a network layer protocol (e.g., an IP protocol). In numerous examples, the higher protocol layer circuit may transmit, to the lower protocol layer circuit, an L4S data flow comprising one or more L4S data packets. In numerous additional examples, the L4S data packets should be buffered at the lower protocol layer circuit in order to process the L4S data packets for transmission and/or prevent data packet loss for the L4S data flow.

In many embodiments, the process 700 may maintain an L4S data queue (block 710). In many examples, the L4S data queue may be maintained to buffer the L4S data packets of the L4S data flow. In many additional embodiments, the maintaining of the L4S data queue may include enqueuing the L4S data packets into the L4S data queue and/or dequeuing the L4S data packets from the L4S data queue. In many further embodiments, the maintaining of the L4S data queue may include recording a count of L4S data packets enqueued in the L4S data queue and/or a count of L4S data packets dequeued from the L4S data queue.

In more embodiments, the process 700 may detect a congestion in the L4S data queue (block 720). In more examples, in order to detect the congestion in the L4S data queue, the process 700 may determine a queue depth associated with the L4S data queue. In numerous examples, the queue depth may represent a count of L4S data packets that are currently buffered in the L4S data queue. In an example, the queue depth may be determined based on the count of L4S data packets dequeued from the L4S data queue and the count of L4S data packets enqueued in the L4S data queue. Upon detecting the queue depth, the process 700 may determine whether the queue depth exceeds a threshold count by comparing the queue depth with the threshold count. In an example, if the queue depth exceeds the threshold count, the process 700 may detect that the congestion is experienced in the L4S data queue. Conversely, if the queue depth does not exceed the threshold count, the process 700 may detect that the congestion is not experienced in the L4S data queue.

In still more embodiments, the process 700 may receive an RSSI value associated with a wireless device (block 730). In still more examples, the RSSI value may represent a power level (or a signal strength) of a wireless signal associated with the wireless device. In numerous examples, the RSSI value may be received upon detecting that the congestion is experienced in the L4S data queue.

In yet more embodiments, the process 700 may compare the received RSSI value with a threshold RSSI value (block 740). In yet more examples, the received RSSI value may be compared with the threshold RSSI value to obtain a comparison result. The comparison result may indicate that the received RSSI value exceeds the threshold RSSI value or the received RSSI value does not exceed the threshold RSSI value.

In still yet more embodiments, the process 700 may set a congestion marking count (block 750). In an example, the process 700 may set the congestion marking count based on the comparison result. For example, if the comparison result indicates that the received RSSI value exceeds the threshold RSSI value, the process 700 may set the congestion marking count to a first value. Conversely, if the comparison result indicates that the received RSSI value does not exceed the threshold RSSI value, the process 700 may set the congestion marking count to a second value. In numerous examples, the second value may be lower than the first value.

In several more embodiments, the process 700 may transmit the congestion signal to the higher protocol layer circuit (block 760). In several more examples, the congestion signal may be transmitted based on the set congestion marking count. In an example, upon setting the congestion marking count, the process 700 may generate a count IE indicating the congestion marking count. Further, the process 700 may transmit, to the higher protocol layer circuit, the congestion signal including the count IE. For example, the congestion signal including the count IE may be transmitted via an MLME interface.

Although a specific embodiment of the process 700 for carrying out the various steps, processes, methods, and operations described herein is discussed with respect to FIG. 7, any of a variety of systems and/or processes may be utilized in accordance with embodiments of the disclosure. For example, upon detecting the congestion in the L4S data queue, the process 700 may determine a count of L4S data packets that are experiencing the congestion in the L4S data queue. Further, the process 700 may set the congestion marking count based on the count of L4S data packets and one of the first value or the second value. The elements depicted in FIG. 7 may also be interchangeable with other elements of FIGS. 1 - 6 and 8 - 13 as required to realize a particularly desired embodiment.

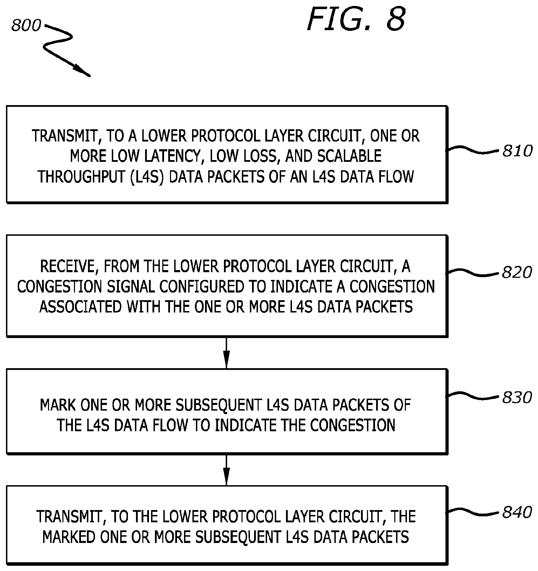

Referring to FIG. 8, a flowchart depicting a process 800 for marking congestion in an L4S data flow in accordance with various embodiments of the disclosure is shown. In various embodiments, the process 800 may be implemented by a network device of a communication network. In various examples, the network device may correspond to an AP having a lower protocol layer circuit and a higher protocol layer circuit. For example, the lower protocol layer circuit may correspond to a circuit that is configured to implement a data link layer protocol (e.g., a MAC protocol). For example, the higher protocol layer circuit may correspond to a circuit that is configured to implement a network layer protocol (e.g., an IP protocol). In an example, the process 800 may be implemented by the higher protocol layer circuit of the AP.

In many embodiments, the process 800 may transmit, to the lower protocol layer circuit, one or more L4S data packets of the L4S data flow (block 810). In an example, the L4S data flow could represent a downstream L4S data flow received from another network device of the communication network and destined to a wireless device of the communication network. In many examples, upon receiving the L4S data packets, the L4S data packets may be enqueued by the lower protocol layer circuit in at least one L4S data queue associated with the lower protocol layer circuit. Upon enqueuing the L4S data packets, congestion in the L4S data queue may be detected by the lower protocol layer circuit. Upon detecting the congestion, a congestion signal may be transmitted by the lower protocol layer circuit to the higher protocol layer circuit. In an example, the congestion signal may be configured to indicate the congestion associated with the L4S data packets.

In more embodiments, the process 800 may receive, from the lower protocol layer circuit, the congestion signal configured to indicate the congestion (block 820). In more examples, the congestion signal may be received from the lower protocol layer circuit in response to transmitting the L4S data packets of the L4S data flow. In some more examples, the congestion signal may include an L4S-CE.indication primitive indicating that the congestion is detected at the lower protocol layer circuit as described in the foregoing description of FIG. 3. In an example, the congestion signal may be received via an MLME interface. In numerous examples, the congestion signal may further include at least one an L4S congestion marking probability associated with the L4S data flow or a classic queue drop probability associated with the L4S data flow.

In still more embodiments, the process 800 may mark one or more subsequent L4S data packets of the L4S data flow to indicate the congestion (block 830). In numerous examples, in order to mark the one or more subsequent L4S data packets to indicate the congestion, the process 800 may determine, based on the congestion signal, a count or percentage of subsequent L4S data packets to mark the congestion. In an example, the count of subsequent L4S data packets may be determined based on at least one of the L4S congestion marking probability or the classic queue drop probability. Further, the process 800 may extract, from the L4S data flow, the one or more subsequent L4S data packets based on the determined count. Furthermore, the process 800 may set a congestion indicator associated with each of the one or more subsequent L4S data packets to a present value (e.g., a CE value of '11'). In an example, the congestion indicator may correspond to an ECN indicator in an IP header associated with each of the one or more subsequent L4S data packets.

In yet more embodiments, the process 800 may transmit, to the lower protocol layer circuit, the marked one or more subsequent L4S data packets (block 840). In an example, the higher protocol layer circuit may transmit the marked one or more subsequent L4S data packets to the lower protocol layer circuit. In various examples, the transmission of the marked one or more subsequent L4S data packets may enable the lower protocol layer circuit to process and forward the marked one or more subsequent L4S data packets to the wireless device. Consequently, the subsequent L4S data packets indicating the CE may be delivered to the wireless device with suppressed delays and without violating the protocol boundaries between the higher protocol layer circuit and the lower protocol layer circuit.

Although a specific embodiment of the process 800 for carrying out the various steps, processes, methods, and operations described herein is discussed with respect to FIG. 8, any of a variety of systems and/or processes may be utilized in accordance with embodiments of the disclosure. For example, prior to extracting the one or more subsequent L4S data packets, the process 800 may further determine a type of L4S data packets to mark the congestion. Further, the process 800 may extract the one or more subsequent L4S data packets from the L4S data flow based on the determined count and the determined type. The elements depicted in FIG. 8 may also be interchangeable with other elements of FIGS. 1 - 7 and 9 - 13 as required to realize a particularly desired embodiment.

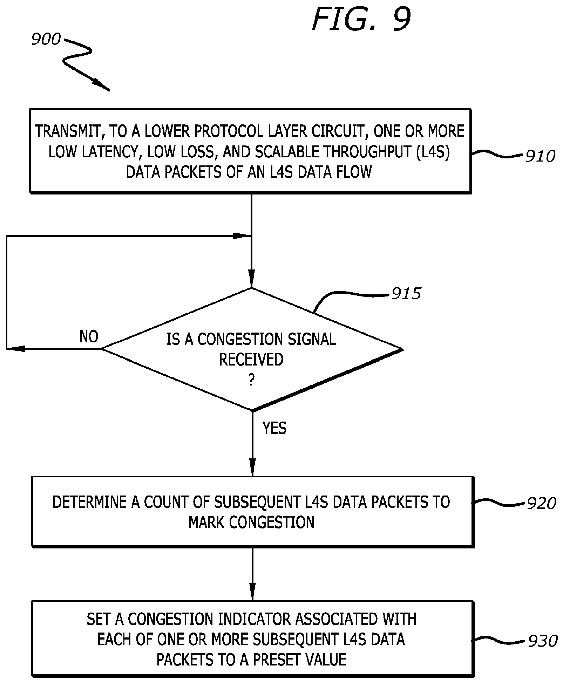

Referring to FIG. 9, a flowchart depicting a process 900 for setting a congestion indicator to a preset value in accordance with various embodiments of the disclosure is shown. In various embodiments, the process 900 may be implemented by a network device of a communication network. In various examples, the network device may correspond to an AP having a lower protocol layer circuit and a higher protocol layer circuit. For example, the lower protocol layer circuit may correspond to a circuit that is configured to implement a data link layer protocol (e.g., a MAC protocol). For example, the higher protocol layer circuit may correspond to a circuit that is configured to implement a network layer protocol (e.g., an IP protocol). In an example, the process 900 may be implemented by the higher protocol layer circuit of the AP.

In many embodiments, the process 900 may transmit, to the lower protocol layer circuit, one or more L4S data packets of an L4S data flow (block 910). In an example, the L4S data flow may represent a downstream L4S data flow received from another network device of the communication network and destined to a wireless device of the communication network. For example, the L4S data packets of the L4S data flow may correspond to data packets that indicate an L4S support in their headers. In many examples, the L4S data packets may be transmitted to the lower protocol layer circuit in anticipation that the lower protocol layer circuit would transmit the L4S data packets to the destined wireless device. As a part of the process of transmitting the L4S data packets to the destined wireless device, the L4S data packets may be enqueued by the lower protocol layer circuit in at least one L4S data queue associated with the lower protocol layer circuit. While enqueuing the L4S data packets, congestion in the L4S data queue may be experienced. In an example, if the congestion in the L4S data queue is detected, a congestion signal may be transmitted by the lower protocol layer circuit to the higher protocol layer circuit. Conversely, if the congestion is not detected, the transmission of the congestion signal may be prohibited by the lower protocol layer circuit.

In more embodiments, the process 900 may determine whether the congestion signal is received (block 915). In more examples, the process 900 may or may not receive the congestion signal based on the detection of the congestion. In still more embodiments, if the congestion signal is not received, the process 900 may wait for a first predetermined time and again determine whether the congestion signal is received (block 915). In still yet more embodiments, if the congestion signal is not received even after waiting for a second predetermined time, the process 900 may prohibit the marking of L4S data packets to indicate the congestion. In an example, the second predetermined time may be greater than the first predetermined time.

In further embodiments, if the congestion signal is received, the process 900 may determine a count of subsequent L4S data packets to mark the congestion (block 920). In various examples, the process 900 may determine the count of subsequent L4S data packets based on the received congestion signal. In numerous examples, the received congestion signal may include at least one of: a congestion marking count associated with the L4S data packets, an L4S congestion marking probability associated with the L4S data flow, or a classic queue drop probability associated with the L4S data flow. In numerous additional examples, the count of subsequent L4S data packets may be determined based on at least one of: the congestion marking count, the L4S congestion marking probability, or the classic queue drop probability. In still further embodiments, upon determining the count of subsequent L4S data packets, the process 900 may extract, from the L4S data flow, one or more subsequent data packets based on the determined count. In an example, the process 900 may extract the one or more subsequent data packets such that a count of the one or more subsequent data packets corresponds to the determined count.

In still yet further embodiments, the process 900 may set the congestion indicator associated with each of the one or more subsequent L4S data packets to the preset value (block 930). In an example, the congestion indicator may correspond to an ECN indicator in an IP header associated with each of the one or more subsequent L4S data packets. For example, the present value may correspond to a CE value of '11'. In various examples, the process 900 may set the ECN indicator in the IP header associated with each of the one or more subsequent L4S data packets to the CE value. Consequently, the one or more subsequent L4S data packets may be configured to indicate the CE.

Although a specific embodiment of the process 900 for carrying out the various steps, processes, methods, and operations described herein is discussed with respect to FIG. 9, any of a variety of systems and/or processes may be utilized in accordance with embodiments of the disclosure. For example, upon setting the congestion indicator to the preset value, the process 900 may transmit, to the lower protocol layer circuit, the subsequent L4S data packets indicating the CE. The elements depicted in FIG. 9 may also be interchangeable with other elements of FIGS. 1 - 8 and 10 - 13 as required to realize a particularly desired embodiment.

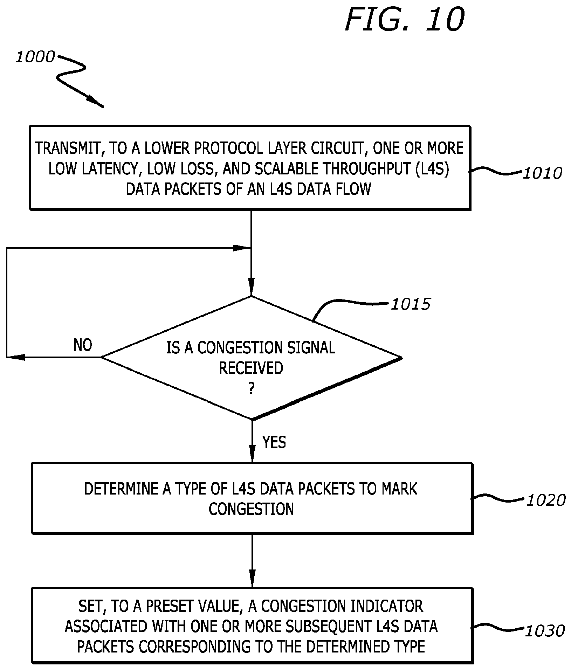

Referring to FIG. 10, a flowchart depicting a process 1000 for setting a congestion indicator to a preset value in accordance with various embodiments of the disclosure is shown. In various embodiments, the process 1000 may be implemented by a network device of a communication network. In various examples, the network device may correspond to an AP having a lower protocol layer circuit and a higher protocol layer circuit. For example, the lower protocol layer circuit may correspond to a circuit that is configured to implement a data link layer protocol (e.g., a MAC protocol). For example, the higher protocol layer circuit may correspond to a circuit that is configured to implement a network layer protocol (e.g., an IP protocol). In an example, the process 1000 may be implemented by the higher protocol layer circuit of the AP.

In many embodiments, the process 1000 may transmit, to the lower protocol layer circuit, one or more L4S data packets of an L4S data flow (block 1010). In an example, the L4S data flow may represent a downstream L4S data flow received from another network device of the communication network and destined to a wireless device of the communication network. For example, the L4S data packets of the L4S data flow may correspond to data packets that indicate an L4S support in their headers. In many examples, the L4S data packets may be transmitted to the lower protocol layer circuit in anticipation that the lower protocol layer circuit would transmit the L4S data packets to the destined wireless device. In order to transmit the L4S data packets to the destined wireless device, the L4S data packets may be classified into at least one type (e.g., an AC) by the lower protocol layer circuit. In an example, the at least one type may include a background AC, a best-effort AC, a video AC, or a voice AC. In various examples, the L4S data packets may be classified based on at least one of a priority associated with the L4S data packets or an SCSID associated with the L4S data packets. Upon classifying the L4S data packets, the L4S data packets may enqueued by the lower protocol layer circuit in an L4S data queue whose type corresponds to the type of the L4S data packets. Further, the enqueued L4S data packets may be transmitted by the lower protocol layer circuit to the destined wireless device. However, while enqueuing the L4S data packets, congestion in the L4S data queue may be experienced. In an example, if the congestion in the L4S data queue is detected, a congestion signal may be transmitted by the lower protocol layer circuit to the higher protocol layer circuit. Conversely, if the congestion is not detected, the transmission of the congestion signal may be prohibited by the lower protocol layer circuit.

In more embodiments, the process 1000 may determine whether the congestion signal is received (block 1015). In more examples, the process 1000 may or may not receive the congestion signal based on the detection of the congestion signal. In still more embodiments, if the congestion signal is not received, the process 1000 may wait for a first predetermined time and again determine whether the congestion signal is received (block 1015). In still yet more embodiments, if the congestion signal is not received even after waiting for a second predetermined time, the process 1000 may prohibit the marking of L4S data packets to indicate the congestion. In an example, the second predetermined time may be greater than the first predetermined time.

In further embodiments, if the congestion signal is received, the process 1000 may determine a type of L4S data packets to mark the congestion (block 1020). In various examples, the process 1000 may determine the type of L4S data packets based on the received congestion signal. In numerous examples, the received congestion signal may include at least one of: the priority associated with the L4S data packets or the SCSID associated with the L4S data packets. In numerous additional examples, the type of L4S data packets may be determined based on at least one of the priority or the SCSID included in the congestion signal. In still further embodiments, upon determining the type of L4S data packets, the process 1000 may extract, from the L4S data flow, one or more subsequent data packets based on the determined type. In an example, the process 1000 may extract the one or more subsequent data packets that correspond to the determined type.

In still further embodiments, the process 1000 may set the congestion indicator associated with each of the one or more subsequent L4S data packets to the preset value (block 1030). In an example, the congestion indicator may correspond to an ECN indicator in an IP header associated with each of the one or more subsequent L4S data packets. For example, the present value may correspond to a CE value of '11'. In various examples, the process 1000 may set the ECN indicator in the IP header associated with each of the one or more subsequent L4S data packets to the CE value. Consequently, the one or more subsequent L4S data packets may be configured to indicate the CE.

Although a specific embodiment of the process 1000 for carrying out the various steps, processes, methods, and operations described herein is discussed with respect to FIG. 10, any of a variety of systems and/or processes may be utilized in accordance with embodiments of the disclosure. For example, prior to extracting the one or more subsequent data packets, the process 1000 may determine a count of subsequent L4S data packets to mark the congestion. The elements depicted in FIG. 10 may also be interchangeable with other elements of FIGS. 1 - 9 and 11 - 13 as required to realize a particularly desired embodiment.

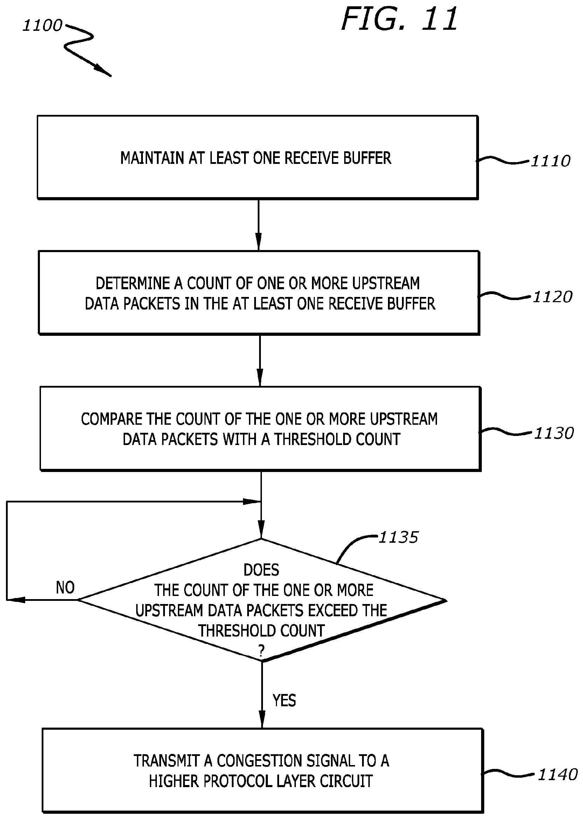

Referring to FIG. 11, a flowchart depicting a process 1100 for transmitting a congestion signal to a higher protocol layer circuit in accordance with various embodiments of the disclosure is shown. In various embodiments, the process 1100 may be implemented by a lower protocol layer circuit coupled to the higher protocol layer circuit. In various examples, the lower protocol layer circuit and the higher protocol layer circuit may be embodied within an AP of a communication network. For example, the lower protocol layer circuit may correspond to a circuit that is configured to implement a data link layer protocol (e.g., a MAC protocol). For example, the higher protocol layer circuit may correspond to a circuit that is configured to implement a network layer protocol (e.g., an IP protocol) or any other higher layer protocol above layer 2.

In many embodiments, the process 1100 may maintain a receive buffer (block 1110). In many examples, in order to maintain the receive buffer, the process 1100 may receive an upstream L4S data flow from a wireless device. In an example, the upstream L4S data flow may include one or more upstream data packets (e.g., upstream L4S data packets) whose source addresses correspond to a MAC address of the wireless device. Upon receiving the upstream L4S data flow, the process 1100 may determine at least one AC associated with the upstream data packets. In an example, the AC may be determined as at least one of: a background AC, a best-effort AC, a video AC, or a voice AC. In various examples, the AC may be determined based on a priority associated with the upstream data packets and/or an SCSID associated with the upstream data packets.

In many additional embodiments, upon determining the AC, the process 1100 may determine whether the AC associated with the upstream data packets corresponds to an AC of the receive buffer. In an example, if the AC associated with the upstream data packets corresponds to an AC of the receive buffer, the process 1100 may enqueue the upstream data packets into the receive buffer. Conversely, if the AC associated with the upstream data packets does not correspond to the AC of the receive buffer, the process 1100 may enqueue the upstream data packets into another receive buffer whose AC corresponds to the AC associated with the upstream data packets. In many further embodiments, the process 1100 may be configured to monitor the receive buffer to record a count of upstream data packets enqueued in the receive buffer and/or a count of upstream data packets dequeued from the receive buffer.

In further embodiments, the process 1100 may determine a count of upstream data packets in the receive buffer (block 1120). In many examples, the process 1100 may determine the count of upstream data packets in the receive buffer based on the count of upstream data packets enqueued in the receive buffer and the count of upstream data packets dequeued from the receive buffer. In an example, the count of upstream data packets in the receive buffer may be determined by subtracting the count of upstream data packets dequeued from the receive buffer from the count of upstream data packets enqueued in the receive buffer.

In still further embodiments, the process 1100 may compare the determined count of upstream data packets with a threshold count (block 1130). In an example, the threshold count may be a pre-configured value for the receive buffer. In various examples, upon comparing the determined count of upstream data packets with the threshold count, the process 1100 may obtain a comparison result. The comparison result may indicate that the determined count is one of: greater than the threshold count, equal to the threshold count, or lesser than the threshold count.

In additional embodiments, the process 1100 may determine whether the determined count exceeds the threshold count (block 1135). In an example, the process 1100 may determine whether the determined count exceeds the threshold count based on the comparison result. In still additional embodiments, if the determined count does not exceed the threshold count, the process 1100 may wait for a predefined time. After the predefined time, the process 1100 may again determine the count of upstream data packets in the receive buffer (block 1120).

In still yet additional embodiments, if the determined count exceeds the threshold count, the process 1100 may transmit the congestion signal to the higher protocol layer circuit (block 1140). In various examples, in order to transmit the congestion signal, the process 1100 may identify, in the receive buffer, a set of upstream data packets that is experiencing the congestion. Upon identifying the set of upstream data packets, the process 1100 may determine a count or a percentage of the set of upstream data packets. Upon determining the count or the percentage of the set of upstream data packets, the process 1100 may set a congestion marking count or a congestion marking percentage. In an example, the congestion marking count may be a function of the count or the percentage of the set of upstream data packets experiencing congestion. Upon setting the congestion marking count or the congestion marking percentage, the process 1100 may transmit, to the higher protocol layer circuit, the congestion signal that is configured to indicate one or more of: the source address associated with the upstream L4S data flow, a destination address associated with the upstream L4S data flow, a congestion experienced flag, the direction of congestion, the priority associated with the set of upstream data packets, the SCSID associated with the set of upstream data packets, an L4S congestion marking probability, a first percentage of packets experiencing congestion, a second percentage of packets to be marked for congestion, a count of upstream data packets experiencing congestion, a count of upstream data packets to be marked for congestion, or the like. In an example, the congestion signal may be transmitted via an MLME interface. In numerous examples, the transmission of the congestion signal may trigger the higher protocol layer circuit to mark one or more upstream data packets of the upstream L4S data flow to indicate the congestion.

Although a specific embodiment of the process 1100 for carrying out the various steps, processes, methods, and operations described herein is discussed with respect to FIG. 11, any of a variety of systems and/or processes may be utilized in accordance with embodiments of the disclosure. For example, the process 1100 may further determine an L4S congestion marking probability for the receive buffer. In this example, the congestion signal may be further configured to indicate the determined L4S congestion marking probability. The elements depicted in FIG. 11 may also be interchangeable with other elements of FIGS. 1 - 10 and 12 - 13 as required to realize a particularly desired embodiment.

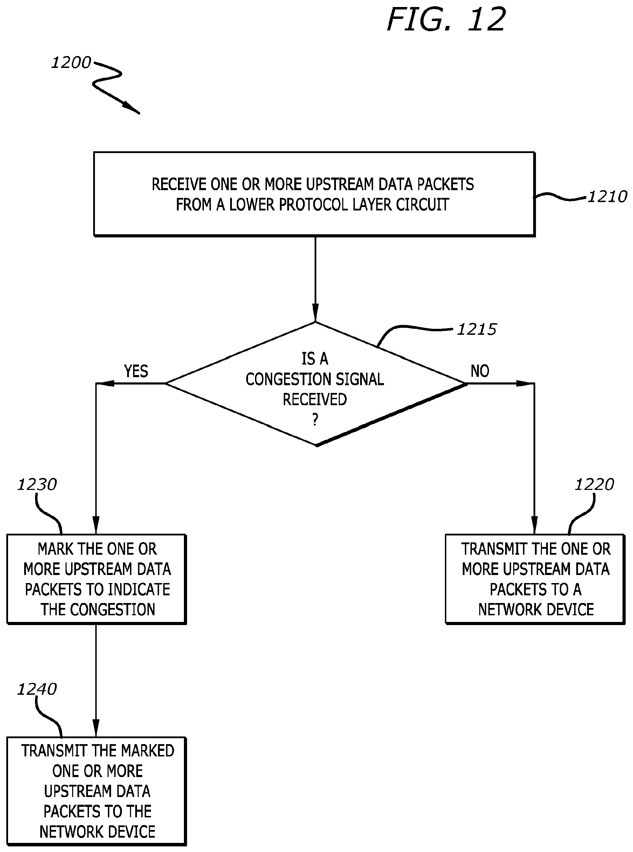

Referring to FIG. 12, a flowchart depicting a process 1200 for transmitting one or more upstream data packets to a network device in accordance with various embodiments of the disclosure is shown. In various embodiments, the process 1200 may be implemented within a communication network. In an example, the communication network may include the network device, an AP, and a wireless device. In various examples, the AP may include a lower protocol layer circuit and a higher protocol layer circuit. For example, the lower protocol layer circuit may correspond to a circuit that is configured to implement a data link layer protocol (e.g., a MAC protocol). For example, the higher protocol layer circuit may correspond to a circuit that is configured to implement a network layer protocol (e.g., an IP protocol). In an example, the process 1200 may be implemented by the higher protocol layer circuit of the AP.

In many embodiments, the process 1200 may receive the one or more upstream data packets from the lower protocol layer circuit (block 1210). In an example, the upstream data packets may correspond to data packets whose source addresses indicate a MAC address of the wireless device. In numerous examples, prior to receiving the upstream data packets from the lower protocol layer circuit, the upstream data packets may be buffered in a receive buffer of the lower protocol layer circuit. In numerous additional examples, while the upstream data packets are buffered in the receive buffer, congestion in the receive buffer may be experienced. In an example, if the congestion in the receive buffer is experienced, a congestion signal may be transmitted by the lower protocol layer circuit along with the upstream data packets. Conversely, if the congestion is not experienced, the transmission of the congestion signal may be prohibited by the lower protocol layer circuit.

In more embodiments, the process 1200 may determine whether the congestion signal is received (block 1215). In more examples, the process 1200 may or may not receive the congestion signal based on the detection of the congestion in the receive buffer. In still more embodiments, if the congestion signal is not received, the process 1200 may transmit the upstream data packets to the network device (block 1220). In an example, the process 1200 may transmit the upstream data packets to the network device by encapsulating each upstream data packet of the upstream data packets with an IP header.

In yet more embodiments, if the congestion signal is received, the process 1200 may mark the upstream stream data packets to indicate the congestion (block 1230). In various examples, marking the upstream stream data packets to indicate the congestion may include setting an ECN indicator for each upstream stream data packet of the upstream stream data packets to a preset value. In an example, the preset value may correspond to a CE value of '11'.

In still yet more embodiments, the process 1200 may transmit the marked upstream stream data packets to the network device (block 1240). For example, in order to transmit the marked upstream stream data packets, the process 1200 may encapsulate each upstream data packet of the upstream data packets with an IP header that includes the set ECN indicator. Further, the process may transmit the encapsulated upstream data packets to the network device. In many examples, the transmission of the marked upstream stream data packets may trigger the network device to transmit a control signal to the wireless device. In an example, the control signal may be an indication to reduce the transmission rate associated with the wireless device.

Although a specific embodiment of the process 1200 for carrying out the various steps, processes, methods, and operations described herein is discussed with respect to FIG. 12, any of a variety of systems and/or processes may be utilized in accordance with embodiments of the disclosure. For example, the process 1200 may also receive a congestion signal for one or more downstream data packets transmitted to the lower protocol layer circuit. The elements depicted in FIG. 12 may also be interchangeable with other elements of FIGS. 1 - 11 and 13 as required to realize a particularly desired embodiment.

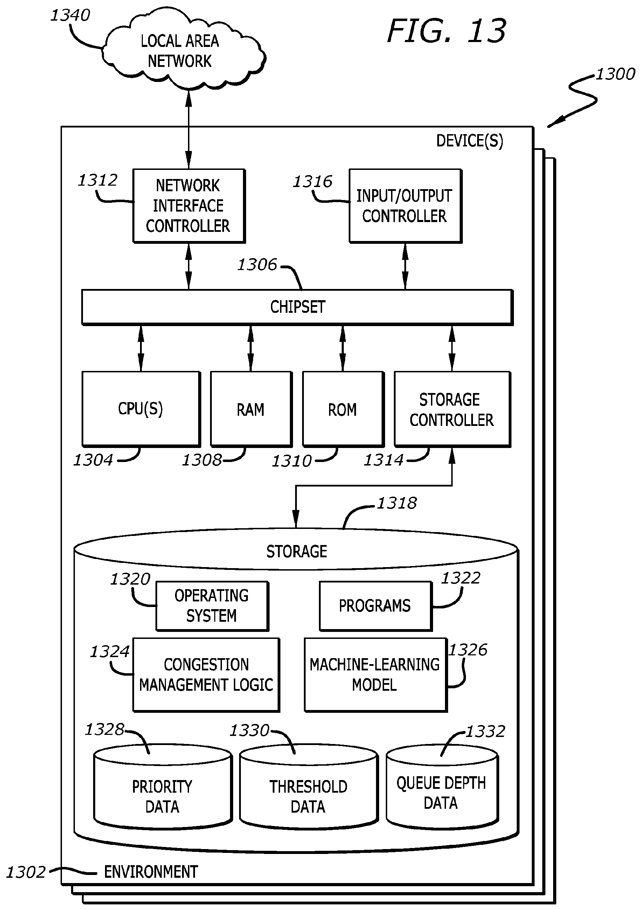

Referring to FIG. 13, a conceptual block diagram of a device 1300 suitable for configuration with a congestion management logic in accordance with various embodiments of the disclosure is shown. The embodiment of the conceptual block diagram depicted in FIG. 13 can illustrate a conventional server, computer, workstation, desktop computer, laptop, tablet, network appliance, e-reader, smartphone, or other computing device, and can be utilized to execute any of the application or logic components presented herein. The embodiment of the conceptual block diagram depicted in FIG. 13 can also illustrate an access point, a switch, or a router in accordance with various embodiments of the disclosure. The device 1300 may, in many non-limiting examples, correspond to physical devices or to virtual resources described herein.

In many embodiments, the device 1300 (e.g., a network device or an AP) may include an environment 1302 such as a baseboard or "motherboard," in physical embodiments that can be configured as a printed circuit board with a multitude of components or devices connected by way of a system bus or other electrical communication paths. Conceptually, in virtualized embodiments, the environment 1302 may be a virtual environment that encompasses and executes the remaining components and resources of the device 1300. In more embodiments, one or more processors 1304, such as, but not limited to, central processing units ("CPUs") can be configured to operate in conjunction with a chipset 1306. The processor(s) 1304 can be standard programmable CPUs that perform arithmetic and logical operations necessary for the operation of the device 1300.

In a number of embodiments, the processor(s) 1304 can perform one or more operations by transitioning from one discrete, physical state to the next through the manipulation of switching elements that differentiate between and change these states. Switching elements generally include electronic circuits that maintain one of two binary states, such as flip-flops, and electronic circuits that provide an output state based on the logical combination of the states of one or more other switching elements, such as logic gates. These basic switching elements can be combined to create more complex logic circuits, including registers, adders-subtractors, arithmetic logic units, floating-point units, and the like.

In various embodiments, the chipset 1306 may provide an interface between the processor(s) 1304 and the remainder of the components and devices within the environment 1302. The chipset 1306 can provide an interface to a random-access memory ("RAM") 1308, which can be used as the main memory in the device 1300 in some embodiments. The chipset 1306 can further be configured to provide an interface to a computer-readable storage medium such as a read-only memory ("ROM") 1310 or non-volatile RAM ("NVRAM") for storing basic routines that can help with various tasks such as, but not limited to, starting up the device 1300 or transferring information between the various components and devices. The ROM 1310 or NVRAM can also store other application components necessary for the operation of the device 1300 in accordance with various embodiments described herein.

Additional embodiments of the device 1300 can be configured to operate in a networked environment using logical connections to remote computing devices and computer systems through a network, such as the network 1340. The chipset 1306 can include functionality for providing network connectivity through a network interface card ("NIC") 1312, which may comprise a gigabit Ethernet adapter or similar component. The NIC 1312 can be capable of connecting the device 1300 to other devices over the network 1340. It is contemplated that multiple NICs 1312 may be present in the device 1300, connecting the device to other types of networks and remote systems.

In further embodiments, the device 1300 can be connected to a storage 1318 that provides non-volatile storage for data accessible by the device 1300. The storage 1318 can, for instance, store an operating system 1320, programs 1322 (e.g., applications), priority data 1328, threshold data 1330, and queue depth data 1332 which are described in greater detail below. The storage 1318 can be connected to the environment 1302 through a storage controller 1314 connected to the chipset 1306. In certain embodiments, the storage 1318 can consist of one or more physical storage units. The storage controller 1314 can interface with the physical storage units through a serial attached SCSI ("SAS") interface, a serial advanced technology attachment ("SATA") interface, a fiber channel ("FC") interface, or other type of interface for physically connecting and transferring data between computers and physical storage units.

The device 1300 can store data within the storage 1318 by transforming the physical state of the physical storage units to reflect the information being stored. The specific transformation of physical state can depend on various factors. Examples of such factors can include, but are not limited to, the technology used to implement the physical storage units, whether the storage 1318 is characterized as primary or secondary storage, and the like.

In still more embodiments, the device 1300 can store information within the storage 1318 by issuing instructions through the storage controller 1314 to alter the magnetic characteristics of a particular location within a magnetic disk drive unit, the reflective or refractive characteristics of a particular location in an optical storage unit, or the electrical characteristics of a particular capacitor, transistor, or other discrete component in a solid-state storage unit, or the like. Other transformations of physical media are possible without departing from the scope and spirit of the present description, with the foregoing examples provided only to facilitate this description. The device 1300 can further read or access information from the storage 1318 by detecting the physical states or characteristics of one or more particular locations within the physical storage units.

In addition to the storage 1318 described above, the device 1300 can have access to other computer-readable storage media to store and retrieve information, such as program modules, data structures, or other data. It should be appreciated by those skilled in the art that computer-readable storage media is any available media that provides for the non-transitory storage of data and that can be accessed by the device 1300. In some examples, the operations performed by a cloud computing network, and or any components included therein, may be supported by one or more devices similar to device 1300. Stated otherwise, some or all of the operations performed by the cloud computing network, and or any components included therein, may be performed by one or more devices 1300 operating in a cloud-based arrangement.

By way of example, and not limitation, computer-readable storage media can include volatile and non-volatile, removable and non-removable media implemented in any method or technology. Computer-readable storage media includes, but is not limited to, RAM, ROM, erasable programmable ROM ("EPROM"), electrically-erasable programmable ROM ("EEPROM"), flash memory or other solid-state memory technology, compact disc ROM ("CDROM"), digital versatile disk ("DVD"), high definition DVD ("HD-DVD"), BLU-RAY, or other optical storage, magnetic cassettes, magnetic tape, magnetic disk storage or other magnetic storage devices, or any other medium that can be used to store the desired information in a non-transitory fashion.

As mentioned briefly above, the storage 1318 can store an operating system 1320 utilized to control the operation of the device 1300. According to one embodiment, the operating system comprises the LINUX operating system. According to another embodiment, the operating system comprises the WINDOWS^{®} SERVER operating system from MICROSOFT Corporation of Redmond, Washington. According to further embodiments, the operating system can comprise the UNIX operating system or one of its variants. It should be appreciated that other operating systems can also be utilized. The storage 1318 can store other system or application programs and data utilized by the device 1300.

In many additional embodiments, the storage 1318 or other computer-readable storage media is encoded with computer-executable instructions which, when loaded into the device 1300, may transform it from a general-purpose computing system into a special-purpose computer capable of implementing the embodiments described herein. These computer-executable instructions may be stored as program 1322 (e.g., an application) and transform the device 1300 by specifying how the processor(s) 1304 can transition between states, as described above. In some embodiments, the device 1300 has access to computer-readable storage media storing computer-executable instructions which, when executed by the device 1300, perform the various processes described above with regard to FIGS. 1 - 12. In certain embodiments, the device 1300 can also include computer-readable storage media having instructions stored thereupon for performing any of the other computer-implemented operations described herein.

In many further embodiments, the device 1300 may include a congestion management logic 1324. The congestion management logic 1324 can be configured to perform one or more of the various steps, processes, operations, or other methods that are described above. Often, the congestion management logic 1324 can be a set of instructions stored within a non-volatile memory that, when executed by the processor(s) 1304 can carry out these steps, etc. In some embodiments, the congestion management logic 1324 may be an application that resides on a network-connected device, such as, but not limited to, a server, switch, personal or mobile computing device in a single or distributed arrangement.

In numerous embodiments, the congestion management logic 1324 may be associated with at least one of a lower protocol layer circuit or a higher protocol layer circuit. In numerous examples, the processor(s) 1304 may function as the lower protocol layer circuit and/or the higher protocol layer circuit. In an example, in order to function as the lower protocol layer circuit and/or the higher protocol layer circuit, the processor(s) 1304 may be configured to implement a MAC protocol and/or a network layer protocol, respectively. In numerous more embodiments, when the congestion management logic 1324 is associated with the lower protocol layer circuit, the congestion management logic 1324 may be configured to detect congestion associated with one or more L4S data packets of an L4S data flow and transmit, to the higher protocol circuit, a congestion signal that indicates the detected congestion. In numerous additional embodiments, when the congestion management logic 1324 is associated with the higher protocol layer circuit, the congestion management logic 1324 may be configured to receive the congestion signal and mark one or more subsequent L4S data packets of the L4S data flow to indicate the detected congestion. As a result, the device 1300 may be enabled to suppress delays in congestion signaling without violating protocol boundaries between the lower protocol layer circuit and the higher protocol layer circuit.

In a number of embodiments, the priority data 1328 may include a priority associated with the L4S data packets. In various examples, the priority may include at least one of a TID associated with the L4S data packets or a UP value associated with the L4S data packets. In some more examples, the L4S data packets may include one or more data packets of an SCS stream. In these examples, the priority data 1328 may also include an SCSID of the SCS stream associated with the L4S data packets.

In a variety of embodiments, the device 1300 may be configured to determine and store the threshold data 1330 in the storage 1318. In an example, the threshold data 1330 may include a threshold count associated with an L4S data queue and/or a threshold RSSI value. In various examples, the threshold data 1330 may be determined based on network conditions or network demands associated with a network of the device 1300. In more examples, the threshold data 1330 may be determined based on the priority data 1328. In some more examples, the threshold data 1330 may be determined based on user input provided by an operator, a developer, or the like.

In various further embodiments, the device 1300 may be configured to determine and store the queue depth data 1332 in the storage 1318. In an example, the queue depth data 1332 may represent a queue depth associated with the L4S data queue. In various examples, the queue depth may indicate a count of L4S data packets that are currently buffered in the L4S data queue. In numerous examples, the queue depth may be determined based on a count of L4S data packets enqueued in the L4S data queue and a count of data packets dequeued from the L4S data queue.

In still further embodiments, the device 1300 can also include one or more input/output controllers 1316 for receiving and processing input from a number of input devices, such as a keyboard, a mouse, a touchpad, a touch screen, an electronic stylus, or other type of input device. Similarly, an input/output controller 1316 can be configured to provide output to a display, such as a computer monitor, a flat panel display, a digital projector, a printer, or other type of output device. Those skilled in the art will recognize that the device 1300 might not include all of the components shown in FIG. 13 and can include other components that are not explicitly shown in FIG. 13 or might utilize an architecture completely different than that shown in FIG. 13.

Finally, in numerous additional embodiments, data may be processed into a format usable by a machine-learning model 1326 (e.g., feature vectors), and or other preprocessing techniques. The machine-learning ("ML") model 1326 may be any type of ML model, such as supervised models, reinforcement models, or unsupervised models. The ML model 1326 may include one or more of linear regression models, logistic regression models, decision trees, Naïve Bayes models, neural networks, k-means cluster models, random forest models, or other types of ML models 1326.

The ML model(s) 1326 can be configured to generate inferences to make predictions or draw conclusions from data. An inference can be considered the output of a process of applying a model to new data. This can occur by learning from at least the priority data 1328, the threshold data 1330, and the queue depth data 1332 and using that learning to predict future outcomes. These predictions are based on patterns and relationships discovered within the data. To generate an inference, the trained model can take input data and produce a prediction or a decision. The input data can be in various forms, such as images, audio, text, or numerical data, depending on the type of problem the model was trained to solve. The output of the model can also vary depending on the problem, and can be a single number, a probability distribution, a set of labels, a decision about an action to take, etc. Ground truth for the ML model(s) 1326 may be generated by human/administrator verifications or may compare predicted outcomes with actual outcomes. Further, the ML model(s) 1326 may be utilized to detect/or predict the congestion associated with the L4S data packets of the L4S data flow and/or determine the subsequent L4S data packets of the L4S data flow to mark the detected congestion.

Although a specific embodiment for a device 1300 suitable for configuration with the congestion management logic for carrying out the various steps, processes, methods, and operations described herein is discussed with respect to FIG. 13, any of a variety of systems and/or processes may be utilized in accordance with embodiments of the disclosure. For example, the device 1300 may correspond to a mobile computing device such as a laptop (or a smartphone), or may correspond to a network device such as an AP. The elements depicted in FIG. 13 may also be interchangeable with other elements of FIGS. 1 - 12 as required to realize a particularly desired embodiment.

Although the present disclosure has been described in certain specific aspects, many additional modifications and variations would be apparent to those skilled in the art. In particular, any of the various processes described above can be performed in alternative sequences and/or in parallel (on the same or on different computing devices) in order to achieve similar results in a manner that is more appropriate to the requirements of a specific application. It is therefore to be understood that the present disclosure can be practiced other than specifically described without departing from the scope and spirit of the present disclosure. Thus, embodiments of the present disclosure should be considered in all respects as illustrative and not restrictive. It will be evident to the person skilled in the art to freely combine several or all of the embodiments discussed here as deemed suitable for a specific application of the disclosure. Throughout this disclosure, terms like "advantageous", "exemplary" or "example" indicate elements or dimensions which are particularly suitable (but not essential) to the disclosure or an embodiment thereof and may be modified wherever deemed suitable by the skilled person, except where expressly required. Accordingly, the scope of the disclosure should be determined not by the embodiments illustrated, but by the appended claims and their equivalents.

Any reference to an element being made in the singular is not intended to mean "one and only one" unless explicitly so stated, but rather "one or more." All structural and functional equivalents to the elements of the above-described preferred embodiment and additional embodiments as regarded by those of ordinary skill in the art are hereby expressly incorporated by reference and are intended to be encompassed by the present claims.

Moreover, no requirement exists for a system or method to address each and every problem sought to be resolved by the present disclosure, for solutions to such problems to be encompassed by the present claims. Furthermore, no element, component, or method step in the present disclosure is intended to be dedicated to the public regardless of whether the element, component, or method step is explicitly recited in the claims. Various changes and modifications in form, material, workpiece, and fabrication material detail can be made, without departing from the spirit and scope of the present disclosure, as set forth in the appended claims, as might be apparent to those of ordinary skill in the art, are also encompassed by the present disclosure.
Aspects and features of the present disclosure are set out in the following numbered clauses which contain the subject matter of the claims of the parent application as filed:
1. A network device, comprising:
   a higher protocol layer circuit; and
   a lower protocol layer circuit coupled to the higher protocol layer circuit, wherein the lower protocol layer circuit is configured to:
      maintain a Low Latency, Low Loss, and Scalable throughput (L4S) data queue, wherein the L4S data queue is configured to buffer one or more L4S data packets of at least one L4S data flow for transmission;
      detect a congestion in the L4S data queue; and
      transmit, to the higher protocol layer circuit, a congestion signal configured to indicate the detected congestion.
2. The network device of clause 1, wherein the lower protocol layer circuit is further configured to identify, from the one or more L4S data packets in the L4S data queue, a set of L4S data packets that is experiencing the congestion.
3. The network device of clause 2, wherein the congestion signal comprises at least one of: a congestion experienced flag, a direction indicating the congestion in downstream, a User Priority (UP) associated with the set of L4S data packets, a Traffic Identifier (TID) associated with the set of L4S data packets, or a Stream Classification Service (SCS) Identifier (SCSID) for an SCS stream associated with the set of L4S data packets.
4. The network device of clause 3, wherein the congestion signal further comprises at least one of a classic queue drop probability identifying a likelihood of packet drop in a non-L4S data queue or L4S congestion information identifying additional information related to the detected congestion.
5. The network device of any of clauses 2 to 4, wherein prior to transmitting the congestion signal, the lower protocol layer circuit is further configured to determine at least one of:
   a first congestion marking count that identifies a count of the set of L4S data packets experiencing the congestion,
   a second congestion marking count that identifies a count of subsequent L4S data packets of the at least one L4S data flow to mark for the congestion,
   an L4S congestion marking probability that identifies a probability of marking at least one subsequent L4S data packet of the at least one L4S data flow for the congestion,
   a first percentage of packets that identifies a percentage of L4S data packets in the L4S data queue for which the congestion is experienced, or
   a second percentage of packets that identifies a percentage of subsequent L4S data packets of the at least one L4S data flow to mark for the congestion, and wherein the congestion signal is further configured to indicate the determined at least one of: the first congestion marking count, the second congestion marking count, the L4S congestion marking probability, the first percentage of packets, or the second percentage of packets.
6. The network device of clause 5, wherein the higher protocol layer circuit is configured to:
   receive the congestion signal from the lower protocol layer circuit; and
   mark, based on the received congestion signal, the at least one subsequent L4S data packet of the at least one L4S data flow to indicate the detected congestion.
7. The network device of clause 6, wherein the marking of the at least one subsequent L4S data packet to indicate the detected congestion comprises setting a congestion indicator associated with the at least one subsequent L4S data packet to a preset value.
8. The network device of clause 7, wherein the congestion indicator corresponds to an Explicit Congestion Notification (ECN) indicator in an Internet Protocol (IP) header of the at least one subsequent L4S data packet, and wherein the ECN indicator is indicative of a Congestion Experienced (CE) value.
9. The network device of any of clauses 6 to 8, wherein the higher protocol layer circuit is further configured to transmit, to the lower protocol layer circuit, the marked at least one subsequent L4S data packet.
10. The network device of any preceding clause, wherein to detect the congestion, the lower protocol layer circuit is further configured to:
   determine a count of the one or more L4S data packets in the L4S data queue; and
   compare the count of the one or more L4S data packets with a threshold count, wherein the congestion is detected based on the count of the one or more L4S data packets exceeding the threshold count.
11. The network device of any preceding clause, wherein the at least one L4S data flow corresponds to a downstream L4S data flow indicative of a source address associated with another network device and a destination address associated with a wireless device, and wherein the congestion signal comprises at least one of the source address or the destination address.
12. The network device of any preceding clause, wherein the lower protocol layer circuit is further configured to transmit an L4S capability indicating that the network device is capable of signaling L4S congestion by way of an Explicit Congestion Notification (ECN) indicator in an Internet Protocol (IP) header.
13. The network device of clause 12, wherein the L4S capability is transmitted in at least one of: a Beacon frame, a Probe Response frame, or a management frame.
14. The network device of any preceding clause, wherein the congestion signal is transmitted via at least one of a Medium Access Control (MAC) Layer Management Entity (MLME) interface or a MAC Service Access Point (MAC SAP) interface or a Station Management Entity (SME) interface.
15. A network device, comprising:
   a higher protocol layer circuit; and
   a lower protocol layer circuit coupled to the higher protocol layer circuit, wherein the lower protocol layer circuit is configured to:
      maintain a receive buffer to buffer for one or more upstream data packets of at least one upstream Low Latency, Low Loss, and Scalable throughput (L4S) data flow;
      detect a congestion in the receive buffer; and
      transmit, to the higher protocol layer circuit, a congestion signal configured to indicate the detected congestion.
16. The network device of clause 15, wherein the higher protocol layer circuit is configured to:
   receive the congestion signal and the one or more upstream data packets from the lower protocol layer circuit;
   mark, based on the received congestion signal, at least one upstream data packet of the one or more upstream data packets to indicate the detected congestion; and
   transmit, to another network device, the marked at least one upstream data packet.
17. The network device of clause 16, wherein the marking of the at least one upstream data packet to indicate the detected congestion comprises setting a congestion indicator associated with the at least one upstream data packet to a preset value.
18. The network device of any of clauses 15 to 17, wherein the congestion signal comprises at least one of: a congestion experienced flag, a direction indicating the congestion in upstream, a User Priority (UP) associated with a set of upstream data packets of the one or more upstream data packets in the receive buffer that is experiencing the detected congestion, a Traffic Identifier (TID) associated with the set of upstream data packets, or a Stream Classification Service (SCS) Identifier (SCSID) for an SCS stream associated with the set of upstream data packets.
19. The network device of clause 18, wherein prior to transmitting the congestion signal, the lower protocol layer circuit is further configured to determine at least one of:
   a first congestion marking count that identifies a count of the set of upstream data packets that is experiencing the congestion,
   a second congestion marking count that identifies a count of upstream data packets of the one or more upstream data packets to mark for the congestion,
   an L4S congestion marking probability that identifies a probability of marking the at least one upstream data packet for the congestion,
   a first percentage of packets that identifies a percentage of upstream data packets in the receive buffer for which the congestion is experienced, or
   a second percentage of packets that identifies a percentage of upstream data packets of the one or more upstream data packets to mark for the congestion, and wherein the congestion signal is further configured to indicate the determined at least one of: the first congestion marking count, the second congestion marking count, the L4S congestion marking probability, the first percentage of packets, or the second percentage of packets.
20. A method, comprising:
   in a network device that comprises a higher protocol layer circuit and a lower protocol layer circuit:
   maintaining, by the lower protocol layer circuit, a Low Latency, Low Loss, and Scalable throughput (L4S) data queue, wherein the L4S data queue buffers one or more L4S data packets of at least one L4S data flow for transmission, or maintaining a receive buffer to buffer for one or more upstream data packets of at least one upstream L4S data flow;
   detecting, by the lower protocol layer circuit, a congestion in the L4S data queue; and
   transmitting, by the lower protocol layer circuit, a congestion signal to the higher protocol layer circuit, wherein the congestion signal indicates the detected congestion.
21. A computer readable medium storing instructions for implementing the method of clause 20

## Claims

1. A wireless access point, comprising;
a higher protocol layer
a lower protocol layer comprising a Media Access Control (MAC) sublayer communicatively coupled to the higher protocol layer;
wherein the higher protocol layer is configured to receive data packets in data flows; and
identify low latency, low loss scalable throughput (L4S) packets in the downstream data flows; and
the lower protocol layer is configured to receive indications of L4S packets of the data packets in the data flows, maintain a Low Latency, Low Loss, and Scalable throughput (L4S) data queue, wherein the L4S data queue is configured to buffer one or more L4S data packets of at least one L4S data flow for transmission monitoring for congestion associated with L4S packets; and
responsive to detecting congestion transmit, to the higher protocol layer, a congestion signal configured to indicate the detected congestion, the indication provided via service primitive signaling to a management interface, wherein the higher protocol layer is further configured, responsive to the congestion signal received via the management interface, to mark one or more subsequent L4S packets of the L4S data flow with a congestion indicator.

2. The wireless access point of claim 1, wherein the congestion signal comprises two or more of a source address, a destination address, a priority indicator, or a stream classification identifier.

3. The wireless access point of claim 1 or 2 wherein the lower protocol layer is further configured to determine a congestion marking probability for the L4S data flow; and wherein the congestion indication further comprises an indication of the congestion marking probability.

4. The wireless access point of any preceding claim wherein at least one of the one or more downstream transmit queues is reserved for L4S data flows.

5. The wireless access point of any preceding claim, wherein monitoring for congestion associated with L4S packets comprises accessing a queue depth of the one or more downstream transmit queues; and comparing the depth of the one or more downstream transmit queues to a threshold value.

6. The wireless access point of any preceding claim, the operations of the MAC sublayer further comprising transmitting one or more management frames including an indication of L4S capability.

7. The wireless access point of any preceding claim, wherein identifying L4S packets in the downstream data flows comprises detecting predetermined values of explicit congestion notification (ECN) indicators in the data packets.

8. The wireless access point of any preceding claim, wherein the management interface is a Medium Access Control (MAC) Layer Management Entity (MLME) interface or a MAC Service Access Point (MAC SAP) interface or a Station Management Entity (SME) interface.

9. The wireless access point of any preceding claim, the operations of the MAC sublayer further comprising classifying the L4S packets into an access category of a plurality of access categories.

10. In a wireless access point, the wireless access point comprising a higher protocol layer; and
a lower protocol layer comprising a Media Access Control (MAC) sublayer communicatively coupled to the higher protocol layer;
a method comprising:
receiving, by the higher protocol layer, data packets in data flows; and
identifying, by the higher protocol layer, low latency, low loss scalable throughput (L4S) packets in the data flows;
receiving, by the lower protocol layer, indications of L4S packets of the data packets in the downstream data flows, queuing, by the lower protocol layer, the L4S packets in one or more transmit queues;
monitoring, by the lower protocol layer, for congestion associated with L4S packets;
responsive to detecting congestion transmitting, by the lower protocol layer to the higher protocol layer, a congestion signal configured to indicate the detected congestion the indication provided via service primitive signaling to a management interface; and
responsive to the congestion signal received via the management interface, marking, by the higher protocol layer, one or more subsequent L4S packets of the L4S data flow with a congestion indicator.

11. The method of claim 10 wherein the congestion signal comprises two or more of a source address, a destination address, a priority indicator, or a stream classification identifier, or further comprising determining, by the lower protocol layer, a congestion marking probability for the L4S data flow; and
wherein the congestion indication further comprises an indication of the congestion marking probability, or wherein at least one of the one or more downstream transmit queues is reserved for L4S data flows, or wherein monitoring for congestion associated with L4S packets comprises accessing a queue depth of the one or more downstream transmit queues; and comparing the depth of the one or more downstream transmit queues to a threshold value, or further comprising:
transmitting, by the MAC sublayer entity, one or more management frames including an indication of L4S capability, or wherein identifying L4S packets in the downstream data flows comprises detecting predetermined values of explicit congestion notification (ECN) indicators in the data packets, or wherein the management interface is a Medium Access Control (MAC) Layer Management Entity (MLME) interface or a MAC Service Access Point (MAC SAP) interface or a Station Management Entity (SME) interface, or further comprising:
classifying, by the MAC sublayer entity, the L4S packets into an access category of a plurality of access categories.

12. A non-transitory computer readable storage medium comprising instructions that when executed perform the method of claim 10 or 11.
